(19) Europäisches Patentamt / European Patent Office / Office européen des brevets

(11) **EP 3 822 662 B1**

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(21) Anmeldenummer: **20207379.7**

(22) Anmeldetag: **13.11.2020**

(51) Internationale Patentklassifikation (IPC):
**G01S 13/06** (2006.01)   **G01S 13/76** (2006.01)
**G01S 13/87** (2006.01)   **H04W 4/02** (2018.01)

(52) Gemeinsame Patentklassifikation (CPC):
**G01S 13/87; G01S 13/765**

(54) **HOCHPRÄZISE UWB-ENTFERNUNGSBESTIMMUNG**

HIGH PRECISION UWB DISTANCE DETERMINATION

DÉTERMINATION DE HAUTE PRÉCISION DE LA DISTANCE À L'AIDE DES TECHNIQUES ULB

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2019 DE 102019130872**

(43) Veröffentlichungstag der Anmeldung:
**19.05.2021 Patentblatt 2021/20**

(73) Patentinhaber: **Neuhold, Daniel**
**9020 Klagenfurt am Wörthersee (AT)**

(72) Erfinder:
• **NEUHOLD, Daniel**
  **9020 Klagenfurt am Wörthersee (AT)**
• **BETTSTETTER, Christian**
  **9020 Klagenfurt am Wörthersee (AT)**

(74) Vertreter: **Samson & Partner Patentanwälte mbB**
**Widenmayerstraße 6**
**80538 München (DE)**

(56) Entgegenhaltungen:
**WO-A1-2018/011792    US-A1- 2018 267 162**

• **NEUHOLD DANIEL DANIEL NEUHOLD@AAU AT ET AL: "HiPR: High-Precision UWB Ranging for Sensor Networks", MODELING, ANALYSIS AND SIMULATION OF WIRELESS AND MOBILE SYSTEMS, ACM, 2 PENN PLAZA, SUITE 701NEW YORKNY10121-0701USA, 25. November 2019 (2019-11-25), Seiten 103-107, XP058448792, DOI: 10.1145/3345768.3355931 ISBN: 978-1-4503-6904-6**

**Beschreibung**

Gebiet

Die vorliegende Offenbarung bezieht sich auf eine hochpräzise Ultrabreitband-(UWB-)Entfernungsbestimmung. Insbesondere bezieht sich die vorliegende Offenbarung auf ein Verfahren, Vorrichtungen, ein Computerprogrammprodukt und ein System zur Realisierung einer hochpräzisen Entfernungsschätzung basierend auf Ultrabreitband-(UWB-)Technologie.

Hintergrund

Grundsätzlich bezieht sich die vorliegende Offenbarung auf Kommunikationen basierend auf Ultrabreitband-(UWB-)Technologie, d.h. jede Art von UWB-Kommunikationssystem. Ein solches UWB-Kommunikationssystem kann durch zwei oder mehr UWB-fähige Vorrichtungen implementiert werden, einschließlich z.B. Sensoren in einem Sensornetzwerk, Roboter in einem Roboternetzwerk, Drohnen in einem Drohnennetzwerk, Telekommunikationsgeräte (etwa Teilnehmerendgeräte wie Mobiltelefone, Tablets, usw.) in einem (z.B. mobilen/zellularen) Telekommunikationsnetzwerk, oder dergleichen.

Im Speziellen bezieht sich die vorliegende Offenbarung auf eine Entfernungsbestimmung ("ranging") in einem solchen UWB-Kommunikationssystem, wobei hierin der Begriff 'Entfernungsbestimmung' sich auf Entfernungsschätzung und Lokalisierung bezieht. Dadurch adressiert die vorliegende Offenbarung das zunehmende Verlangen nach Lokalisierung sowohl in Innen- als auch in Außenumgebungen, z.B. in Logistik, Robotik, Telekommunikation und anderen Bereichen, unter der Annahme, dass UWB als die zugrundeliegende Kommunikationstechnologie verwendet wird.

Viele Lokalisierungstechniken teilen die Notwendigkeit einer Entfernungsschätzung - auch Entfernungsbestimmung ("ranging") genannt - zwischen zwei oder mehr Vorrichtungen. Die Entfernungsschätzungen sollen akkurat (d.h. nahe dem echten Wert) und präzise (d.h. wenig statistisch variabel) sein. Außerdem soll der Entfernungsschätzprozess schnell sein, was für Echtzeitaufgaben, wie etwa Steuerungsaufgaben, besonders wichtig ist.

Die Entfernung zwischen zwei Vorrichtungen kann aus der Zeit berechnet werden, die ein Signal braucht, um zwischen den zwei Vorrichtungen zu ver-/ laufen bzw. sich zwischen den zwei Vorrichtungen auszubreiten, welche als Flug- bzw. Laufzeit (ToF: "Time of Flight") bezeichnet wird, nämlich indem diese mit der Geschwindigkeit des Signals (üblicherweise der Lichtgeschwindigkeit) multipliziert wird. Zur Bestimmung der Flug- bzw. Laufzeit können Zeitstempel verwendet werden, um die Momente zu markieren/bezeichnen, zu denen das Signal gesendet und empfangen wird. Es besteht jedoch üblicherweise eine Abweichung zwischen der wahren Flug- bzw. Laufzeit und einer Differenz zwischen diesen Sende- und Empfangszeitstempeln, welche als Ausbreitungszeit $T_p$ bezeichnet wird. Mögliche Gründe, die diese Abweichung verursachen, sind ungenaue Takte, ungenaue Synchronisation und ungenaue Zeitstempel.

Während der Einfluss von ungenauen Takten in der Praxis vernachlässigt werden kann, können Fehler in der Entfernungsbestimmung, die durch ungenaue Synchronisation verursacht werden, durch Verwendung eines Entfernungsbestimmungsprotokolls, das keine Synchronisation erfordert, vermieden werden.

Ein solches Entfernungsbestimmungsprotokoll ist in der EP 3 158 359 A1 offenbart, das sich auf ein asymmetrisches doppelseitiges Zwei-Wege-Entfernungsbestimmungsverfahren in einem Ultrabreitband-(UWB-) Kommunikationssystem bezieht. Darin wird ein Protokoll einer doppelseitigen Zwei-Wege-Entfernungsbestimmung (DS-TWR) unter Verwendung von drei Nachrichten beschrieben, wobei drei Nachrichten zwischen zwei Vorrichtungen bzw. Sendeempfängern ausgetauscht werden, um ein Paar von Rundlaufverzögerungsmessungen zu vervollständigen, und eine Schätzung der ToF zwischen den zwei Vorrichtungen bzw. Sendeempfängern basierend auf Sende- bzw. Empfangszeitpunkten der drei Nachrichten berechnet wird, die durch jeweilige Zeitstempel in den drei Nachrichten bestimmt werden.

In dem vorstehend dargelegten Entfernungsbestimmungsprotokoll tritt eine variable Verzögerung zwischen der Zeitstempelerzeugung und dem tatsächlichen Moment auf, zu dem die zugehörige Nachricht tatsächlich/physikalisch gesendet oder empfangen wird, was zu einem nichtdeterministischen Fehler in der ToF-Schätzung führt. Außerdem wird in dem vorstehend dargelegten Entfernungsbestimmungsprotokoll ein Zeitstempel Software-basiert generiert und dann im Rahmen der Nachrichtenerzeugung in den Header einer Datennachricht eingefügt, was zu einer längeren Verzögerung und damit zu einer langsamen ToF-Schätzung führt.

Weitere Hintergrundtechnik ist bekannt aus der Druckschrift WO 2018/011792 A und der Druckschrift US 2018/267162 A1.

Kurzfassung

Es ist eine Aufgabe der vorliegenden Offenbarung, eine hochpräzise Ultrabreitband-(UWB-)Entfernungsbestimmung, d.h. eine Technik zur Realisierung einer präzisen und schnellen Entfernungsschätzung basierend auf Ultrabreitband-(UWB) Technologie, bereitzustellen.

Verschiedene Ausführungsbeispiele der vorliegenden Offenbarung zielen darauf ab, zumindest einen Teil der vorstehend dargelegten Sachverhalte und/oder Probleme zu adressieren.

Erfindungsgemäß werden ein Verfahren, Vorrichtungen, ein Computerprogrammprodukt und ein System bereitgestellt, wie sie in den Patentansprüchen definiert sind.

Gemäß einem Aspekt der vorliegenden Offenbarung ist ein Entfernungsbestimmungsprotokoll offenbart, bei dem zur Entfernungsbestimmung vier Beacon-Nachrichten zwischen einer ersten und einer zweiten Vorrichtung ausgetauscht werden, wobei Hardwareinterrupts zum Erfassen der jeweiligen Sende- und Empfangszeitpunkte der ersten bis dritten Beacon-Nachrichten als Zeitstempel an der jeweiligen Vorrichtung getriggert werden, die erforderlichen Zeitstempel in Beacon-Nachrichten an die andere Vorrichtung übertragen werden, und eine Schätzung einer Flugzeit zwischen der ersten und der zweiten Vorrichtung basierend auf den Zeitstempeln bezüglich der Übertragung der ersten bis dritten Beacon-Nachrichten hergeleitet wird.

Durch diese Konfiguration wird eine hochpräzise und schnelle Entfernungsbestimmung zwischen der ersten und der zweiten Vorrichtung ermöglicht.

Weitere Merkmale und Aspekte der vorliegenden Offenbarung werden aus der folgenden ausführlichen Beschreibung, den Zeichnungen und den Patentansprüchen ersichtlich.

Figurenkurzbeschreibung

Fig. 1 zeigt Sequenzdiagramme, die jeweils einen beispielhaften Ablauf eines Entfernungsbestimmungsprotokolls gemäß einem Ausführungsbeispiel darstellen,

Fig. 2 zeigt eine schematische Darstellung, die eine beispielhafte Nachrichtenübertragung bei einem Entfernungsbestimmungsprotokoll gemäß einem Ausführungsbeispiel darstellt,

Fig. 3 zeigt eine schematische Darstellung, die eine beispielhafte Nachrichtenübertragung bei einem Entfernungsbestimmungsprotokoll gemäß einem Ausführungsbeispiel darstellt,

Fig. 4 zeigt eine schematische Darstellung, die eine beispielhafte Nachrichtenübertragung bei einem Entfernungsbestimmungsprotokoll gemäß einem Ausführungsbeispiel darstellt,

Fig. 5 Sequenzdiagramme, die jeweils einen beispielhaften Ablauf eines Entfernungsbestimmungsprotokolls gemäß einem Ausführungsbeispiel darstellen,

Fig. 6 zeigt Graphen, die experimentelle Testergebnisse in Form von Histogrammen von Entfernungsbestimmungen darstellen,

Fig. 7 zeigt Graphen, die experimentelle Testergebnisse in Form von Entfernungsbestimmungsgenauigkeiten darstellen, und

Fig. 8 zeigt eine schematische Darstellung, die einen beispielhaften Aufbau einer Vorrichtung gemäß einem Ausführungsbeispiel darstellt.

Ausführliche Beschreibung

Die vorliegende Offenbarung wird nachstehend mit Bezug auf spezielle nichteinschränkende Beispiele und Ausgestaltungen beschrieben. Der Fachmann wird erkennen, dass die vorliegende Offenbarung keineswegs auf die hierin nachstehend beschriebenen Beispiele und Ausgestaltungen beschränkt ist, sondern in einem weiteren Sinne bzw. Umfang angewandt werden kann. Weiterhin wird der Fachmann erkennen, dass diverse Beispiele und Ausgestaltungen, wie sie nachstehend beschrieben sind, kombiniert werden können.

In der nachfolgenden Beschreibung wird die vorliegende Offenbarung mit Bezug auf eine Anwendung im Bereich der Ultrabreitband-(UWB-)Kommunikation beschrieben. Es ist jedoch zu beachten, dass die vorliegende Offenbarung nicht auf UWB-Kommunikation beschränkt ist, sondern auf jede beliebige Kommunikationstechnologie angewandt werden kann. Weiterhin ist zu beachten, dass jedweder Bezug auf Ultrabreitband bzw. UWB allgemein eine breitbandige Nahbereichsfunkkommunikation meint und nicht auf irgendeine spezielle Spezifikation oder Standardisierung beschränkt ist. Insbesondere soll Ultrabreitband bzw. UWB jede derzeitige und künftige Technologie zur drahtlosen Kommunikation unter Nutzung großer Frequenzbereiche bzw. Bandbreiten einschließen.

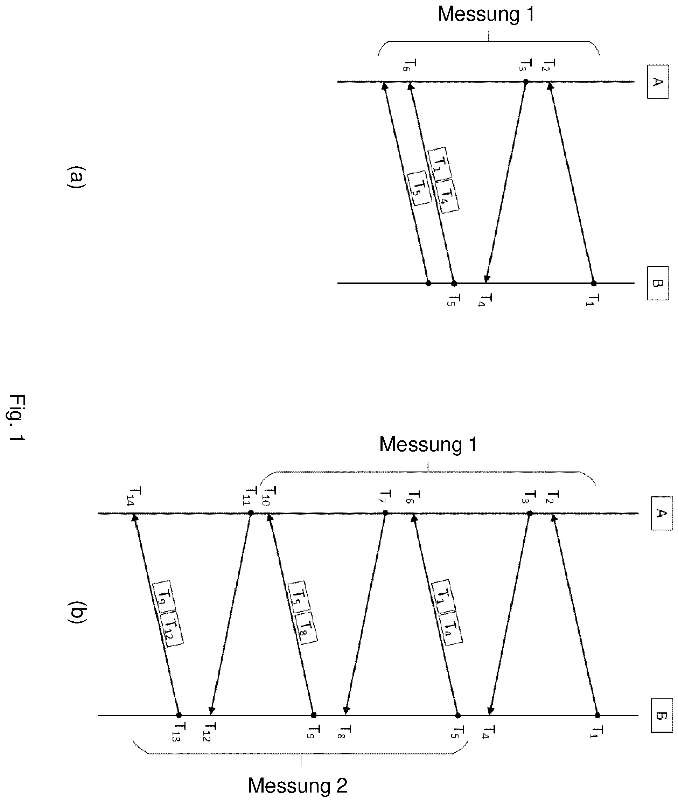

Mit Bezug auf Figuren 1 bis 5 werden beispielhafte Ausführungsbeispiele von einem Entfernungsbestimmungsprotokoll (Verfahren zur Entfernungsbestimmung zwischen einer ersten Vorrichtung und einer zweiten Vorrichtung) gemäß der vorliegenden Offenbarung beschrieben. Das Entfernungsbestimmungsprotokoll bzw. -verfahren dient dabei zur Entfernungsbestimmung (‚ranging') zwischen den Vorrichtungen A und B, die beispielhaft jeweils UWB-fähige Vorrichtungen sind, sodass sie ein UWB-Kommunikationssystem bilden. Die Vorrichtungen A und B können z.B. Sensoren in einem Sensornetzwerk, Roboter in einem Roboternetzwerk, Drohnen in einem Drohnennetzwerk, Telekommunikationsgeräte (etwa Teilnehmerendgeräte wie Mobiltelefone, Tablets, usw.) in einem (z.B. mobilen/zellularen) Telekommunikationsnetzwerk, usw. oder eine Kombination dieser sein.

Fig. 1 zeigt Sequenzdiagramme, die jeweils einen beispielhaften Ablauf eines Entfernungsbestimmungsprotokolls gemäß einem Ausführungsbeispiel darstellen.

Dabei stellt Fig. 1(a) eine einzelne Messung oder einen einzelnen Entfernungsbestimmungszyklus dar und stellt Fig. 1(b) eine kontinuierliche Messung oder kontinuierliche Entfernungsbestimmungszyklen dar (wobei zu Veranschaulichungszwecken nur zwei Messungen bzw. zwei aufeinanderfolgende bzw. überlappende Entfernungsbestimmungszyklen bezeichnet sind).

In beiden Abläufen gemäß Fig. 1(a) und Fig. 1(b) wird eine erste Beacon-Nachricht von Vorrichtung B an Vorrichtung A übertragen. Beim Senden der ersten Beacon-Nachricht wird ein Hardwareinterrupt zum Erfassen des Sendezeitpunkts der ersten Beacon-Nachricht von Vorrichtung B als erster Zeitstempel $T_1$ an/durch Vorrichtung B getriggert. Beim Empfangen der ersten Beacon-Nachricht wird ein Hardwareinterrupt zum Erfassen des Empfangszeitpunkts der ersten Beacon-Nachricht an Vorrichtung A als zweiter Zeitstempel $T_2$ an/durch Vorrichtung A getriggert. Dann wird eine zweite Beacon-Nachricht, als Antwort auf bzw. in Erwiderung auf Empfang der ersten Beacon-Nachricht, von Vorrichtung A an Vorrichtung B übertragen. Beim Senden der zweiten Beacon-Nachricht wird ein Hardwareinterrupt zum Erfassen des Sendezeitpunkts der zweiten Beacon-Nachricht von Vorrichtung A als dritter Zeitstempel $T_3$ an/durch Vorrichtung A getriggert. Beim Empfangen der zweiten Beacon-Nachricht wird ein Hardwareinterrupt zum Erfassen des Empfangszeitpunkts der zweiten Beacon-Nachricht an Vorrichtung B als vierter Zeitstempel $T_4$ an/durch Vorrichtung B getriggert. Dann wird eine dritte Beacon-Nachricht, als Antwort auf bzw. in Erwiderung auf Empfang der zweiten Beacon-Nachricht, von Vorrichtung B an Vorrichtung A übertragen. Beim Senden der dritten Beacon-Nachricht wird ein Hardwareinterrupt zum Erfassen des Sendezeitpunkts der dritten Beacon-Nachricht von Vorrichtung B als fünfter Zeitstempel $T_5$ an/durch Vorrichtung B getriggert. Beim Empfangen der dritten Beacon-Nachricht wird ein Hardwareinterrupt zum Erfassen des Empfangszeitpunkts der dritten Beacon-Nachricht an Vorrichtung A als sechster Zeitstempel $T_6$ an/durch Vorrichtung A getriggert. In der dritten Beacon-Nachricht, die von Vorrichtung B an Vorrichtung A übertragen wird, sind der erste Zeitstempel $T_1$ und der vierte Zeitstempel $T_4$ beinhaltet, d.h. die dritte Beacon-Nachricht enthält Informationen über den ersten Zeitstempel $T_1$ und den vierten Zeitstempel $T_4$, die durch Vorrichtung B eingebunden/-fügt werden. Auf Empfang der dritten Beacon-Nachricht extrahiert Vorrichtung A (die Informationen über) den ersten Zeitstempel $T_1$ und den vierten Zeitstempel $T_4$ aus der dritten Beacon-Nachricht. Nach der dritten Beacon-Nachricht wird eine vierte Beacon-Nachricht von Vorrichtung B an Vorrichtung A übertragen, die den fünften Zeitstempel $T_5$ beinhaltet, d.h. die vierte Beacon-Nachricht enthält Informationen über den fünften Zeitstempel $T_5$, die durch Vorrichtung B eingebunden/-fügt werden. Auf Empfang der vierten Beacon-Nachricht extrahiert Vorrichtung A (die Informationen über) den fünften Zeitstempel $T_5$ aus der vierten Beacon-Nachricht.

Damit kennt Vorrichtung A alle Zeitstempel bezüglich der Übertragung der ersten bis dritten Beacon-Nachrichten, nämlich die ersten bis sechsten Zeitstempel $T_1$, $T_2$, $T_3$, $T_4$, $T_5$ und $T_6$. Basierend auf den ersten bis sechsten Zeitstempeln leitet Vorrichtung A eine Schätzung einer Flug- bzw. Laufzeit (ToF: "Time of Flight") zwischen Vorrichtungen A und B (als Grundlage für die Bestimmung der Entfernung zwischen Vorrichtungen A und B) her. Die Entfernung kann dann von Vorrichtung A berechnet werden, indem die geschätzte Flug- bzw. Laufzeit mit der Geschwindigkeit der Übertragung der Beacon-Nachrichten (üblicherweise der Lichtgeschwindigkeit) multipliziert wird.

Im Ablauf gemäß Fig. 1(a) wird als die vierte Beacon-Nachricht eine dedizierte Beacon-Nachricht verwendet, die nicht zur Entfernungsbestimmung zwischen Vorrichtungen A und B verwendet wird. Bei einzelner Messung oder einzelnem Entfernungsbestimmungszyklus werden also 4 Beacon-Nachrichten zwischen Vorrichtungen A und B ausgetauscht.

Im Ablauf gemäß Fig. 1(b) erfolgt eine kontinuierliche Messung, wobei die erste Messung bzw. der erste Entfernungsbestimmungszyklus mit der Beacon-Nachricht beginnt, die bei Zeitstempel $T_1$ gesendet wird, und die zweite Messung bzw. der zweite Entfernungsbestimmungszyklus mit der Beacon-Nachricht beginnt, die bei Zeitstempel $T_5$ gesendet wird. Dabei wird als die vorgenannte vierte Beacon-Nachricht eine Beacon-Nachricht eines nachfolgenden Entfernungsbestimmungszyklus zur Entfernungsbestimmung zwischen den Vorrichtungen A und B verwendet. In dem dargestellten Ablauf wird nämlich die dritte Beacon-Nachricht der zweiten Messung als vierte Beacon-Nachricht der ersten Messung genutzt. Daher sind in dieser Beacon-Nachricht, die von Vorrichtung B an Vorrichtung A übertragen wird, der Zeitstempel $T_5$, der gleichzeitig der fünfte Zeitstempel der ersten Messung und der erste Zeitstempel der zweiten Messung ist, und der Zeitstempel $T_8$, der der vierte Zeitstempel der zweiten Messung ist, beinhaltet. Bei kontinuierlicher Messung oder kontinuierlichen Entfernungsbestimmungszyklen wird also keine zusätzliche dedizierte Beacon-Nachricht benötigt, um den fünften Zeitstempel $T_5$ zu kommunizieren, sondern wird die Kommunikation des fünften Zeitstempels $T_5$ in der nachfolgenden Messung erledigt. Das heißt, dass nachfolgende Messungen genutzt werden, um ausstehende Zeitstempel der vorhergehenden Messung/en zu übertragen. Außerdem wird der Zeitstempel $T_6$ sowohl für die erste Messung als auch für die zweite Messung genutzt. Damit ergibt sich für n durchgeführte Messungen, eine Anzahl von (2*n)+2 Beacon-Nachrichten (vorausgesetzt, dass der letzte Zeitstempel bei der einzelnen Messung gemäß Fig. 1(a) kommuniziert wird). Bei n = 5 ergeben sich somit beispielsweise 12 Beacon-Nachrichten anstelle von 5*4 = 20 Beacon-Nachrichten, die bei separierten Messungen gemäß dem Ablauf von Fig. 1(a) anfallen.

Bei kontinuierlicher Messung gilt die vorstehende Beschreibung für die erste Messung entsprechend für jede weitere Messung bzw. jeden weiteren Entfernungsbestimmungszyklus.

Gemäß der vorliegenden Offenbarung ist eine Beacon-Nachricht eine kurze Nachricht, bevorzugt eine Nachricht mit minimaler Größe ist. Eine solche Nachricht mit minimaler Größe, die hierin beispielhaft als Beacon-Nachricht bezeichnet wird, enthält keine Nutzlast oder enthält als Nutzlast einen oder zwei Zeitstempel. Im Hinblick auf Fig. 1(a) und Fig. 1(b) bedeutet dies zum Beispiel, dass die erste Beacon-Nachricht keine Nutzlast enthält, dass die dritte Beacon-Nachricht eine Nutzlast enthält, die (die Informationen über) den ersten und den vierten Zeitstempel $T_1$ und $T_4$ enthält, und dass die vierte Beacon-Nachricht eine Nutzlast enthält, die (die Informationen über) den fünften Zeitstempel $T_5$ enthält. In Fig. 1(a) und Fig. 1(b) wird die Nutzlast in Beacon-Nachrichten durch entsprechende Kästchen über den Nachrichtenpfeilen dargestellt, wobei das Fehlen eines solchen Kästchens über dem Nachrichtenpfeil eine (in Bezug auf Nutzlast) leere Beacon-Nachrichten darstellt.

Gemäß der vorliegenden Offenbarung wird, für jede Beacon-Nachricht, der Zeitstempel getriggert, wenn die Beacon-Nachricht durch eine Antenne der jeweiligen Vorrichtung abgestrahlt oder aufgefangen wird. Im Hinblick auf Fig. 1(a) und Fig. 1(b) bedeutet dies zum Beispiel, dass der erste Zeitstempel $T_1$ (bzw. der diesem entsprechende Hardwareinterrupt) getriggert wird, wenn die erste Beacon-Nachricht tatsächlich an die Antenne von Vorrichtung B gelangt/kommt oder von dieser tatsächlich abgestrahlt wird, und dass der zweite Zeitstempel $T_2$ (bzw. der diesem entsprechende Hardwareinterrupt) getriggert wird, wenn die erste Beacon-Nachricht tatsächlich an die Antenne von Vorrichtung A gelangt/kommt oder von dieser tatsächlich aufgefangen wird.

Durch dieses Vorgehen basierend auf Hardwareinterrupts, mit denen der exakte Sendezeitpunkt (besser) mit dem tatsächlichen Sendevorgang/-event (über die Antenne) übereinstimmt, kann jedoch der Zeitstempel des Sendezeitpunkts nicht in der jeweiligen Beacon-Nachricht eingebunden/-fügt und kommuniziert werden und muss dieser in einer nachfolgenden Beacon-Nachricht eingebunden/-fügt und kommuniziert werden. Dies ist deshalb so, da die Beacon-Nachricht beim Versenden über die Antenne fertig erstellt ist und schon in diesem Moment die Vorrichtung verlässt, wohingegen der damit getriggerte Hardwareinterrupt bzw. der entsprechende Zeitstempel noch gar nicht (rechtzeitig) vorhanden war. Im Hinblick auf Fig. 1(a) und Fig. 1(b) ist dies zum Beispiel für die erste Beacon-Nachricht zu erkennen, die zum Zeitstempel $T_1$ versendet wird, wobei der Zeitstempel $T_1$ erst in der dritten Beacon-Nachricht kommuniziert wird.

Durch die Hardwareinterrupts und die Nutzung von Beacon-Nachrichten, wie sie vorstehend beschrieben sind, kann bei dem Entfernungsbestimmungsprotokoll gemäß der vorliegenden Offenbarung eine besonders exakte Zeitstempelung und damit eine besonders genaue Entfernungsbestimmung erzielt werden. Das heißt, dass eine Verzögerung zwischen der Zeitstempelerzeugung und dem tatsächlichen Moment, zu dem die zugehörige Beacon-Nachricht tatsächlich/physikalisch gesendet oder empfangen wird, im Vergleich zu herkömmlichen Techniken verkürzt werden kann, was zu einer Verringerung eines nichtdeterministischen Fehlers in der ToF-Schätzung führt. Eine solche Verkürzung der Verzögerung wird dadurch erzielt, dass die verwendeten Beacon-Nachrichten keine oder nur minimale Nutzlast enthalten (also keine herkömmlichen Nutzlast- oder Datennachrichten sind), weshalb deren Erstellung schneller erfolgen kann, und dass nicht die (Software-basierte) Nachrichtenerzeugung (bzw. die Software-basierte Einbindung/-fügung eines zur generierten Zeitstempels in den Header einer Datennachricht) sondern der/das (Hardware-getriggerte) Nachrichtenübertragungsvorgang/-event als Zeitstempel herangezogen wird, weshalb der exakte Sende- bzw. Empfangszeitpunkt (besser) mit dem tatsächlichen Sende- bzw. Empfangsvorgang/-event (über die Antenne) übereinstimmt und damit kein Verzug zwischen Software- und Hardwareprozessen in die ToF-Schätzung einfließt.

Es ist zu beachten, dass die Zeitstempel an Vorrichtung A mit Bezug auf den lokalen Takt bzw. Clock von Vorrichtung A bestimmt werden und angegeben sind und die Zeitstempel an Vorrichtung B mit Bezug auf den lokalen Takt bzw. Clock von Vorrichtung B bestimmt werden und angegeben sind. Da jedoch der Einfluss von ungenauen Takten bzw. Clock-Abweichungen zwischen Vorrichtungen A und B in der Praxis vernachlässigt werden kann, wird hierin davon ausgegangen, dass alle genannten Zeitstempel auf einen gemeinsamen Takt bzw. Clock bezogen sind.

Bei der beispielhaften Darstellung gemäß Fig. 1 wird angenommen, dass die Entfernungsbestimmung an Vorrichtung A erfolgt. Die Entfernungsbestimmung kann jedoch zusätzlich oder alternativ an Vorrichtung B erfolgen. Zu diesem Zweck muss, zusätzlich oder alternativ zu der Kommunikation der Zeitstempel $T_1$, $T_4$ und $T_5$ von Vorrichtung B an Vorrichtung A, eine Kommunikation der Zeitstempel $T_2$, $T_3$ und $T_6$ von Vorrichtung A an Vorrichtung B erfolgen, damit Vorrichtung B alle Zeitstempel bezüglich der Übertragung der ersten bis dritten Beacon-Nachrichten kennt. Eine solche Kommunikation der Zeitstempel von Vorrichtung A an Vorrichtung B kann so erfolgen, dass Zeitstempel $T_2$ in der zweiten Beacon-Nachricht kommuniziert wird und Zeitstempel $T_3$ und $T_6$ in einer zusätzlichen Beacon-Nachricht kommuniziert werden (die in Fig. 1(a) nicht veranschaulicht ist und in Fig. 1(b) der Beacon-Nachricht entspreche kann, die zum Zeitstempel $T_7$ versendet wird).

Bei der beispielhaften Darstellung gemäß Fig. 1 wird angenommen, dass die Entfernungsbestimmung durch Vorrichtung A zu einer anderen Vorrichtung B erfolgt. Die Entfernungsbestimmung kann jedoch auch zu mehreren anderen Vorrichtungen B erfolgen. Zu diesem Zweck werden die Beacon-Nachrichten jeweils zwischen Vorrichtung A und jeder der anderen Vorrichtungen B ausgetauscht, wie es vorstehend beispielhaft für die eine Vorrichtung B beschrieben ist. Eine solche Entfernungsbestimmung zu mehreren anderen Vorrichtungen B ist insbesondere zweckdienlich, wenn Vorrichtung A eine Station mit zentraler oder kontrollierender Rolle ist, etwa eine (Art von) Basisstation, eine (Art von) Master, wie etwa der Master in einem Sensornetzwerk oder einem Cluster innerhalb eines Sensornetzwerks, oder dergleichen.

Bei der beispielhaften Darstellung gemäß Fig. 1 wird angenommen, dass die erste Beacon-Nachricht die erste Nachricht ist, die zwischen Vorrichtungen A und B ausgetauscht wird, d.h. dass Vorrichtung B die Entfernungsbestimmung (selbstbestimmt) auslöst oder initiiert. Die Entfernungsbestimmung kann jedoch auch durch Vorrichtung A ausgelöst oder initiiert werden. Zu diesem Zweck überträgt, vor der ersten Beacon-Nachricht, Vorrichtung A eine entsprechende Nachricht, etwa eine Beacon-Nachricht, oder ein entsprechendes Signal an Vorrichtung B, woraufhin Vorrichtung B dann die erste Beacon-Nachricht überträgt.

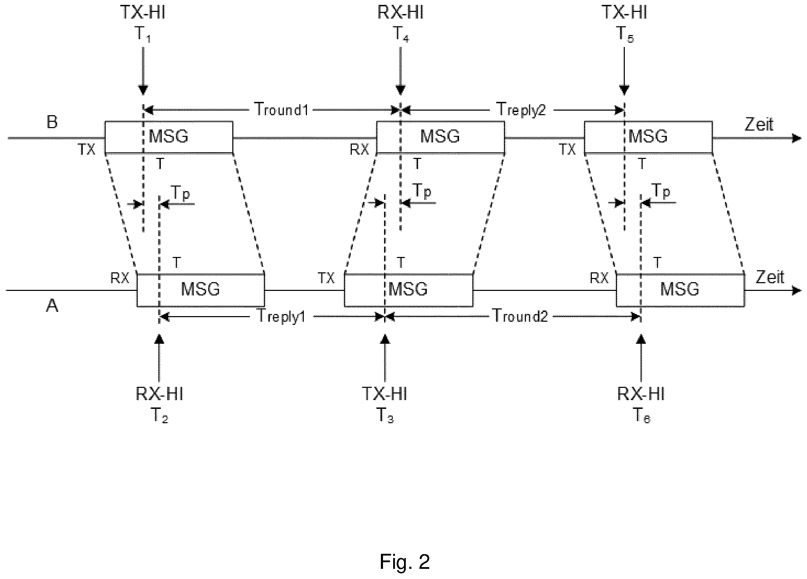

Fig. 2 zeigt eine schematische Darstellung, die eine beispielhafte Nachrichtenübertragung bei einem Entfernungsbestimmungsprotokoll gemäß einem Ausführungsbeispiel darstellt. Die Darstellung gemäß Fig. 2 stellt insbesondere die ersten bis dritten Beacon-Nachrichten und die für die Entfernungsbestimmung relevanten Parameter und Größen detailliert dar, wobei sie grundsätzlich auf der Darstellung von Fig. 1 beruht bzw. dieser entspricht.

In Fig. 2 bezeichnet MSG eine jeweilige Beacon-Nachricht (wobei diese ungeachtet der zu Veranschaulichungszwecken dienenden Länge eine kurze Nachricht mit minimaler Länge ist), bezeichnet T einen Zeitstempel (oder dessen Zeitpunkt), bezeichnet $T_p$ eine Ausbreitungszeit zwischen Vorrichtungen A und B, bezeichnen TX bzw. RX ein Senden bzw. Empfangen, und bezeichnet TX-HI bzw. RX-HI einen (einem jeweiligen Zeitstempel entsprechenden) Hardwareinterrupt zum Erfassen eines Sende- bzw. Empfangszeitpunkts.

Aus Fig. 2 ist ersichtlich, dass zum Beispiel der Hardwareinterrupt TX-HI bezüglich des Sendezeitpunkts der ersten Beacon-Nachricht bei Zeitpunkt bzw. Zeitstempel $T_1$ getriggert wird, der einem relevant Bezugspunkt T zur Bestimmung der Ausbreitungszeit $T_p$ der ersten Beacon-Nachricht entspricht, dass zum Beispiel der Hardwareinterrupt RX-HI bezüglich des Empfangszeitpunkts der ersten Beacon-Nachricht bei Zeitpunkt bzw. Zeitstempel $T_2$ getriggert wird, der dem relevant Bezugspunkt T zur Bestimmung der Ausbreitungszeit $T_p$ der ersten Beacon-Nachricht entspricht, und so weiter.

In Fig. 2 stellt $T_{round1}$ eine Antwortperiode zwischen dem ersten Zeitstempel $T_1$ und dem vierten Zeitstempel $T_4$ dar, stellt $T_{round2}$ eine Antwortperiode zwischen dem dritten Zeitstempel $T_3$ und dem sechsten Zeitstempel $T_6$ dar, stellt $T_{reply1}$ eine Sendeperiode zwischen dem zweiten Zeitstempel $T_2$ und dem dritten Zeitstempel $T_3$ dar, und stellt $T_{reply2}$ eine Sendeperiode zwischen dem vierten $T_4$ Zeitstempel und dem fünften Zeitstempel $T_5$ dar.

Gemäß dem vorliegenden Ausführungsbeispiel kann die Schätzung der Flug- bzw. Laufzeit (ToF: "Time of Flight") zwischen Vorrichtungen A und B hergeleitet werden durch Berechnung von $\widetilde{\text{ToF}}$ unter Verwendung der folgenden Gleichung:

$$\widetilde{\text{ToF}} = \frac{T_{round1}T_{round2} - T_{reply1}T_{reply2}}{T_{round1} + T_{round2} + T_{reply1} + T_{reply2}}$$

Das heißt, dass bei dem in Fig. 1 und Fig. 2 dargestellten Beispiel Vorrichtung A die Berechnung durchführen kann, indem sie die dazu benötigen Parameter basierend auf den zuvor gewonnenen Zeitstempeln bestimmt.

Die Flug- bzw. Laufzeit (ToF: "Time of Flight") zwischen Vorrichtungen A und B kann hierbei als die ToF-Schätzung erhalten werden, die für einen Satz von Beacon-Nachrichten hergeleitet wird (da jeweils eine erste, zweite und dritte Beacon-Nachricht zwischen Vorrichtungen A und B übertragen wird).

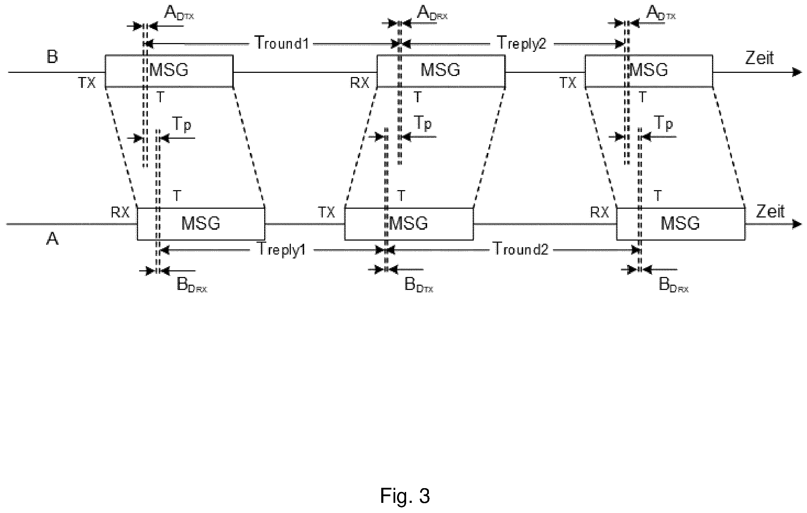

Fig. 3 zeigt eine schematische Darstellung, die eine beispielhafte Nachrichtenübertragung bei einem Entfernungsbestimmungsprotokoll gemäß einem Ausführungsbeispiel darstellt. Die Darstellung gemäß Fig. 3 stellt insbesondere die ersten bis dritten Beacon-Nachrichten und die für die Entfernungsbestimmung relevanten Parameter und Größen detailliert dar, wobei sie grundsätzlich auf der Darstellung von Fig. 1 beruht bzw. dieser entspricht.

In Fig. 3 bezeichnet MSG eine jeweilige Beacon-Nachricht (wobei diese ungeachtet der zu Veranschaulichungszwecken dienenden Länge eine kurze Nachricht mit minimaler Länge ist), bezeichnet T einen Zeitstempel (oder dessen Zeitpunkt), bezeichnet $T_p$ eine Ausbreitungszeit zwischen Vorrichtungen A und B, und bezeichnen TX bzw. RX ein Senden bzw. Empfangen. Die Darstellung von TX-HI und RX-HI, wie in Fig. 2, ist hier der Übersichtlichkeit halber weggelassen.

In Fig. 3 stellt $T_{round1}$ eine Antwortperiode zwischen dem ersten Zeitstempel $T_1$ und dem vierten Zeitstempel $T_4$ dar, stellt $T_{round2}$ eine Antwortperiode zwischen dem dritten Zeitstempel $T_3$ und dem sechsten Zeitstempel $T_6$ dar, stellt $T_{reply1}$ eine Sendeperiode zwischen dem zweiten Zeitstempel $T_2$ und dem dritten Zeitstempel $T_3$ dar, und stellt $T_{reply2}$ eine Sendeperiode zwischen dem vierten $T_4$ Zeitstempel und dem fünften Zeitstempel $T_5$ dar. Ferner stellt $A_{DTX}$ eine Hardware-spezifische Sendeverzögerung eines Sendeempfängers von Vorrichtung A dar, stellt $B_{DTX}$ eine Hardware-spezifische Sendeverzögerung eines Sendeempfängers von Vorrichtung B dar, stellt $A_{DRX}$ eine Hardware-spezifische Empfangsverzögerung eines Sendeempfängers von Vorrichtung A dar, und stellt $B_{DRX}$ eine Hardware-spezifische Empfangsverzögerung eines Sendeempfängers von Vorrichtung B dar.

Grundsätzlich weist jeder Sendeempfänger unterschiedliche Toleranzen und Hardwareeigenschaften auf. Dies führt jedoch zu kleinen Unterschieden in der Genauigkeit beim Zeitstempeln, was wiederum zu Fehlern in den Entfernungsbestimmungen führt.

Gemäß dem vorliegenden Ausführungsbeispiel kann dieser Fehler jedoch beseitigt werden, indem die jeweilige Hardware-spezifische Toleranz des Sendeempfängers in die Schätzung/Berechnung von ToF einbezogen wird. Durch die Toleranzen entstehen unterschiedliche Verzögerungen auf Empfänger- und Sendeseite für jede Vorrichtung (A und B). Dies wird im Folgenden als $D_{TX}$ und $D_{RX}$ bezeichnet und beschreibt den Unterschied des getriggerten Zeitstempels zum tatsächlichen Sende- bzw. Empfangsvorgang/-event (gemessen für jeden Sendeempfänger). Durch eine entsprechende Kompensation kann die Schätzung/Berechnung der ToF zu exakt gleichen bzw. besser übereinstimmenden Ergebnissen bei Messungen mit verschiedener Hardware wie beispielsweise einem Sensornetzwerk von 100 Knoten führen.

Dabei ist folgendes zu beachten.

$D_{TX}$: Der tatsächliche Sendezeitpunkt kann nur nach dem bestmöglichen Sendezeitpunkt-Zeitstempel passieren.
$D_{RX}$: Der tatsächliche Empfangszeitpunkt kann nur vor dem bestmöglichen Empfangszeitpunkt-Zeitstempel passieren.

Gemäß dem vorliegenden Ausführungsbeispiel kann die Schätzung der Flug- bzw. Laufzeit (ToF: "Time of Flight") zwischen Vorrichtungen A und B hergeleitet werden durch Berechnung von $\widehat{\mathrm{ToF}}$ unter Verwendung der folgenden Gleichung:

$$\widehat{\mathrm{ToF}} = \frac{(T_{round1} - A_{D_{TX}} - A_{D_{RX}})(T_{round2} - B_{D_{TX}} - B_{D_{RX}}) - (T_{reply1} + B_{D_{RX}} + B_{D_{TX}})(T_{reply2} + A_{D_{RX}} + A_{D_{TX}})}{T_{round1} + T_{round2} + T_{reply1} + T_{reply2}}$$

Das heißt, dass bei dem in Fig. 1 und Fig. 2 dargestellten Beispiel Vorrichtung A die Berechnung durchführen kann, indem sie die dazu benötigen Parameter basierend auf den zuvor gewonnenen Zeitstempeln bestimmt bzw. als inhärente gerätespezifische Parameter kennt (z.B. aus einem Speicher ausliest).

Die Flug- bzw. Laufzeit (ToF: "Time of Flight") zwischen Vorrichtungen A und B kann hierbei als die ToF-Schätzung erhalten werden, die für einen Satz von Beacon-Nachrichten hergeleitet wird (da jeweils eine erste, zweite und dritte Beacon-Nachricht zwischen Vorrichtungen A und B übertragen wird).

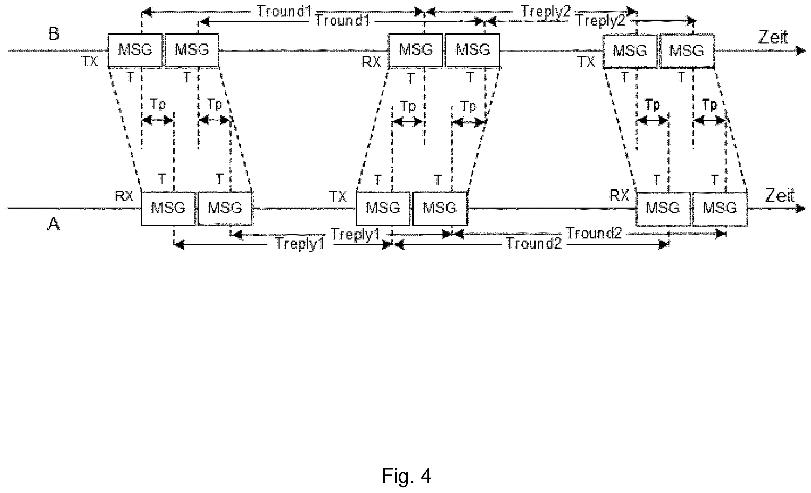

Fig. 4 zeigt eine schematische Darstellung, die eine beispielhafte Nachrichtenübertragung bei einem Entfernungsbestimmungsprotokoll gemäß einem Ausführungsbeispiel darstellt. Die Darstellung gemäß Fig. 4 stellt insbesondere die ersten bis dritten Beacon-Nachrichten und die für die Entfernungsbestimmung relevanten Parameter und Größen detailliert dar, wobei sie grundsätzlich auf der Darstellung von Fig. 1 beruht bzw. dieser entspricht. Die einzelnen Bezeichnungen in Fig. 4 entsprechen denjenigen in Fig. 2 und daher wird auf deren Beschreibung Bezug genommen und eine Wiederholung weggelassen.

Gemäß Fig. 4 ist eine Nachrichtenübertragung im Burst-Modus dargestellt. Dabei wird nicht jeweils eine einzelne Beacon-Nachricht (d.h. erste bis dritte Beacon-Nachricht) zwischen Vorrichtungen A und B übertragen, sondern werden zwei Beacon-Nachrichten (d.h. erste bis dritte Beacon-Nachrichten) zwischen Vorrichtungen A und B übertragen. Damit kann die Entfernungsbestimmung zwischen Vorrichtungen A und B basierend auf den sechs Zeitstempeln der jeweils ersten Nachricht der beiden Nachrichtentripel und den sechs Zeitstempeln der jeweils zweiten Nachricht der beiden Nachrichtentripel erfolgen.

Das heißt, dass die Berechnung gemäß Fig. 2 oder die Berechnung gemäß Fig. 3 zweimal, einmal für jedes Nachrichtentripel je Burst, durchgeführt werden kann.

Es werden hier also mehrere Beacon-Nachrichten unverzüglich hinter-/ nacheinander (also ohne relevante, aber konsistente Verzögerung dazwischen) in jede Richtung geschickt. Dadurch kann für eine Vielzahl von Messungen die Zeit für die Entfernungsbestimmung signifikant verringert werden, da ein Umschalten zwischen Empfang und Senden von Nachrichten (am Sendeempfänger) Zeit und in eine Richtung sogar einen Neustart des Sendeempfängers erfordert, was (in Bezug auf die gesamte Entfernungsbestimmung) durch den Burst von Nachrichten minimiert werden kann. Da zum Beispiel bei 1000 Messungen nur 3 Mal zwischen Senden und Empfangen gewechselt werden muss, ist eine Entfernungsbestimmung im Burst-Modus effizienter (da ohne den Burst-Modus 3000 Mal umgeschaltet werden müsste).

Gemäß dem vorliegenden Ausführungsbeispiel kann also die Übertragung der Beacon-Nachrichten zwischen Vorrichtungen A und B in einem Burst-Modus erfolgen. Das heißt, dass eine vorbestimme Anzahl von ersten Beacon-Nachrichten hintereinander von der einen Vorrichtung an die andere Vorrichtung gesendet wird, die vorbestimme Anzahl von zweiten Beacon-Nachrichten hintereinander von der anderen Vorrichtung an die eine Vorrichtung gesendet wird, und eine vorbestimme Anzahl von dritten Beacon-Nachrichten hintereinander von der einen Vorrichtung an die andere Vorrichtung gesendet wird

Die Flug- bzw. Laufzeit (ToF: "Time of Flight") zwischen Vorrichtungen A und B kann hierbei als ein Mittelwert der ToF-Schätzungen erhalten werden, die für Sätze von Beacon-Nachrichten hergeleitet werden (da jeweils mehrere erste, zweite und dritte Beacon-Nachrichten zwischen Vorrichtungen A und B übertragen werden). Alternativ können auch die Parameter $T_{round1/2}$ und $T_{reply1/2}$ über die Sätze von Beacon-Nachrichten gemittelt werden, und kann die ToF-Schätzung basierend auf diesen Mittelwerten durchgeführt werden.

Durch den Burst-Modus gemäß dem vorliegenden Ausführungsbeispiel kann eine unverzügliche (Neu-)Initiierung (d.h. Erstellung und Übertragung) mehrerer Nachrichten erfolgen, wodurch Gewinne hinsichtlich reduzierter Zeitverzögerung und erhöhter Effizienz (z.B. erhöhter Genauigkeit bzw. Präzision) erzielt werden. Insbesondere kann dadurch auf vorteilhafter Weise ein häufiges/häufigeres Umschalten zwischen Sende- und Empfangsmodus des Sendeempfängers vermieden werden, was zu Zeitvorteilen führt bzw. beiträgt.

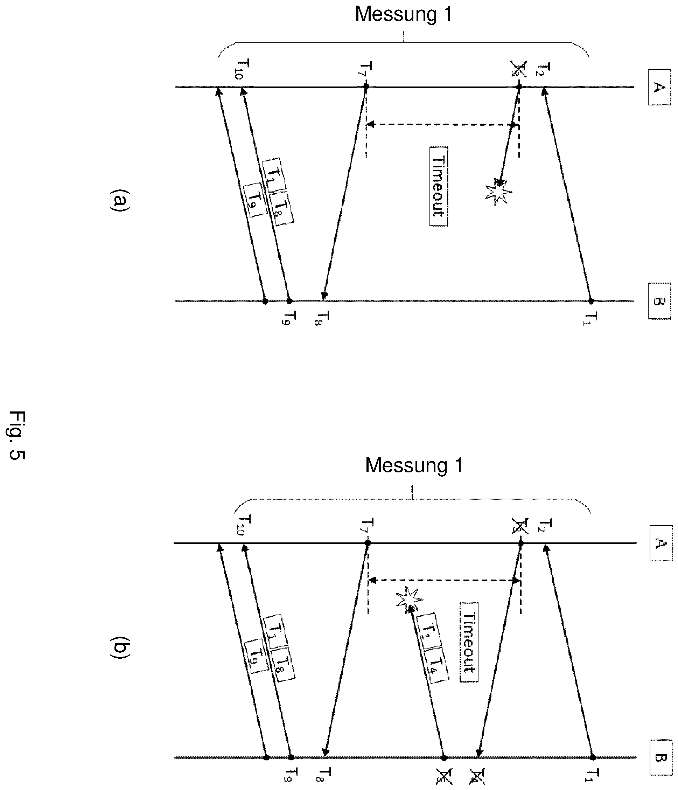

Fig. 5 Sequenzdiagramme, die jeweils einen beispielhaften Ablauf eines Entfernungsbestimmungsprotokolls gemäß einem Ausführungsbeispiel darstellen. Das Entfernungsbestimmungsprotokoll gemäß Fig. 5 stellt eine Variante des Entfernungsbestimmungsprotokolls gemäß Fig. 1 im Fall eines Fehlers bei der Übertragung der ersten bis dritten Beacon-Nachrichten dar. Dabei stellt Fig. 5(a) das Entfernungsbestimmungsprotokoll bei Auftreten eines Fehlers auf der Seite von Vorrichtung A dar, und stellt Fig. 5(b) das Entfernungsbestimmungsprotokoll bei Auftreten eines Fehlers auf der Seite von Vorrichtung B dar.

Im Ablauf gemäß Fig. 5(a) tritt ein Fehler bei Übertragung der zweiten Beacon-Nachricht von Vorrichtung A an Vorrichtung B auf, sodass die zweite Beacon-Nachricht zwar von Vorrichtung A gesendet wird (wodurch der Zeitstempel $T_3$ getriggert wird), aber nicht bei Vorrichtung B ankommt. Dadurch werden an Vorrichtung B die zweite Beacon-Nachricht nicht empfangen und die dritte Beacon-Nachricht nicht gesendet, weshalb die Zeitstempel $T_4$ und $T_5$ nicht getriggert werden. Somit wird der Zeitstempel $T_3$ an Vorrichtung A invalide. Aufgrund des Fehlens der dritten Beacon-Nachricht nach einer vorbestimmten Zeitperiode nach Senden der zweiten Beacon-Nachricht wird an/durch Vorrichtung A eine Zeitüberschreitung, d.h. ein Timeout, ausgelöst. Damit wird die vorher gesendete zweite Beacon-Nachricht und auch der dieser entsprechende Zeitstempel $T_3$ verworfen, und wird eine neue Beacon-Nachricht als Ersatz für die vorher gesendete zweite Beacon-Nachricht gesendet. Für diese neue zweite Beacon-Nachricht wird Zeitstempel $T_7$ als Sende-dezeitpunkt getriggert. Der weitere Ablauf erfolgt, wie es für Fig. 1(a) vorstehend beschrieben ist. Damit kann Vorrichtung A letztendlich eine Schätzung einer Flug- bzw. Laufzeit (ToF: "Time of Flight") zwischen Vorrichtungen A und B basierend auf den ersten bis sechsten Zeitstempeln herleiten, wobei die relevanten Zeitstempel hierbei die Zeitstempel $T_1$, $T_2$, $T_7$, $T_8$, $T_9$ und $T_{10}$ sind.

Mit diesem Ablauf wird also eine zusätzliche Nachricht (im Vergleich zu dem Ablauf gemäß Fig. 1(a)) benötigt, um den Paketfehler auszugleichen, ohne die Genauigkeit zu beeinträchtigen. Dies ergibt einen erheblichen Zeitgewinn gegenüber einem Fall (wie bei herkömmlichen Techniken), dass bei einem Paketfehler der gesamte Nachrichtenaustausch neu begonnen werden muss.

Im Ablauf gemäß Fig. 5(b) tritt ein Fehler bei Übertragung der dritten Beacon-Nachricht von Vorrichtung B an Vorrichtung A auf, sodass die dritte Beacon-Nachricht zwar von Vorrichtung B gesendet wird, aber nicht bei Vorrichtung A ankommt. Somit werden der Zeitstempel $T_3$ an Vorrichtung A und die Zeitstempel $T_4$ und $T_5$ an Vorrichtung B invalide. Aufgrund des Fehlens der dritten Beacon-Nachricht nach einer vorbestimmten Zeitperiode nach Senden der zweiten Beacon-Nachricht wird an/durch Vorrichtung A eine Zeitüberschreitung, d.h. ein Timeout, ausgelöst. Damit wird die vorher gesendete zweite Beacon-Nachricht und auch der dieser entsprechende Zeitstempel $T_3$ verworfen, und wird eine neue Beacon-Nachricht als Ersatz für die vorher gesendete zweite Beacon-Nachricht gesendet. Für diese neue zweite Beacon-Nachricht wird Zeitstempel $T_7$ als Sendezeitpunkt getriggert. Der weitere Ablauf erfolgt, wie es für Fig. 1(a) vorstehend beschrieben ist. Damit kann Vorrichtung A letztendlich eine Schätzung einer Flug- bzw. Laufzeit (ToF: "Time of Flight") zwischen Vorrichtungen A und B basierend auf den ersten bis sechsten Zeitstempeln herleiten, wobei die relevanten Zeitstempel hierbei die Zeitstempel $T_1$, $T_2$, $T_7$, $T_8$, $T_9$ und $T_{10}$ sind.

Mit diesem Ablauf werden also zwei zusätzliche Nachrichten (im Vergleich zu dem Ablauf gemäß Fig. 1(a)) benötigt, um den Paketfehler auszugleichen, ohne die Genauigkeit zu beeinträchtigen. Dies ergibt immer noch einen erheblichen Zeitgewinn gegenüber einem Fall (wie bei herkömmlichen Techniken), dass bei einem Paketfehler der gesamte Nachrichtenaustausch neu begonnen werden muss.

Gemäß dem vorliegenden Ausführungsbeispiel kann das Entfernungsbestimmungsprotokoll also ein Durchführen einer Fehlerbehandlung an der ersten und/oder der zweiten Vorrichtung aufweisen. Die Fehlerbehandlung kann aufweisen: Bestimmen einer Zeitüberschreitungsbedingung, wenn innerhalb einer vorbestimmten Zeitperiode seit dem Sendezeitpunkt der vorher gesendeten Beacon-Nachricht keine Beacon-Nachricht empfangen wird, Verwerfen des Zeitstempels des Sendezeitpunkts der vorher gesendeten Beacon-Nachricht, und (Neu-)Initiieren eines Sendens einer Beacon-Nachricht, die die vorher gesendete Beacon-Nachricht ersetzt, wobei ein Hardwareinterrupt zum Erfassen deren Sendezeitpunkts als entsprechender Zeitstempel getriggert wird, der den verworfenen Zeitstempel ersetzt.

Durch die Fehlerbehandlung gemäß dem vorliegenden Ausführungsbeispiel können je nach Bedarf einzelne Beacon-Nachrichten gezielt wiederholt werden, ohne den gesamten Ablauf eines Entfernungsbestimmungszyklus erneut starten zu müssen. Dadurch werden Gewinne hinsichtlich reduzierter Zeitverzögerung und erhöhter Effizienz (z.B. reduzierter Verarbeitungslast) erzielt.

Algorithmus in Pseudocode

```
Daten:
Anzahl-von-Entfernungsbestimmungen
Anzahl-von-Iterationen


Ergebnis:
Entfernung


/* Initiierung */
Knotenentdeckung
Knotenscheduling
Topologieerstellung


/* Start von Entfernungsbestimmung */
for Anzahl-von-Entfernungsbestimmungen do
        for Anzahl von Knoten do
                /* Protokoll ausführen */
                for drei Tp-Messungen do
                        for Anzahl-von-Iterationen do
                                /* Fehlerbehandlung */
                                if Nachrichten-Timeout überschritten then
                                        Nachricht verwerfen
                                        Nachricht neu initiieren
                                else
                                        Tp berechnen
                                        Zeitstempel sammeln
                                end
                        end
                Mittelwert von Tp berechnen
                end
        ToF berechnen
        Entfernung zurückgeben
        end
/* Optional Entfernung broadcasten */
Broadcast(Knoten-IDS, Entfernung)
end
```

Gemäß einem Ausführungsbeispiel kann das Entfernungsbestimmungsprotokoll mit Burst-Modus (für Sätze von jeweils drei Beacon-Nachrichten) und Fehlerbehandlung beispielhaft durch einen Algorithmus in Pseudocode dargestellt werden, wie er vorstehend veranschaulicht ist.

Für das Broadcasten, d.h. die Rundsendung bzw. Verteilung, des Ergebnisses der Entfernungsbestimmung an (alle) weiteren Vorrichtungen bzw. Knoten in dem zugrundeliegenden System bzw. Netzwerk kann ein dedizierter Schlitz in einer Time Division Multiple Access-(TDMA)-Struktur vorgesehen sein. Dadurch können ein verbesserter Arbeitszyklus und eine längere Ruhezeit der anderen Vorrichtungen bzw. Knoten erreicht werden.

Gemäß der vorliegenden Offenbarung kann das Entfernungsbestimmungsprotokoll zusätzlich eine Korrekturfunktion umfassen. Das heißt, dass die Vorrichtung, an der die Entfernungsbestimmung durchgeführt wird, die erhaltenen Entfernung unter Verwendung einer Korrekturfunktion, die eine Beziehung zwischen einer Entfernungsbestimmungsungenauigkeit und einer Entfernung als Ergebnis einer Kalibrierung beschreibt, korrigiert.

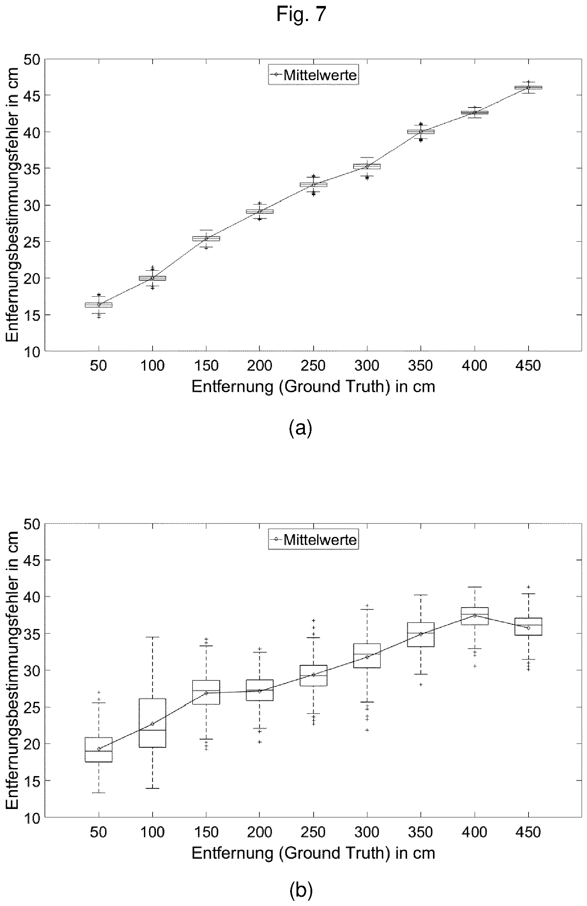

Vor der eigentlichen Entfernungsbestimmung, kann eine Kalibrierung von/an der Vorrichtung durchgeführt werden, die die Entfernungsbestimmung durchführen (können) soll. Dazu werden Entfernungen zu Vorrichtungen bestimmt, die jeweils eine definierte Entfernung haben, und zwar mit einer für eine zuverlässige statistische Auswertung ausreichenden Häufigkeit. Zum Beispiel können Entfernungsbestimmungen zu Vorrichtungen in Entfernungen von 50 cm, 100 cm, 200 cm, usw., je nach gewünschter Genauigkeit, zum Beispiel 50, 100, usw. Mal, durchgeführt werden, kann basierend darauf die Genauigkeit (‚accuracy') für jede definierte Entfernung bestimmt werden, und kann daraus eine Korrekturfunktion hergeleitet werden, die die Beziehung zwischen der Entfernungsbestimmungsungenauigkeit und der Entfernung beschreibt. Eine solche Korrekturfunktion kann zum Beispiel die Kurve in Fig. 7(a) sein.

Wie es aus Fig. 7(a) ersichtlich ist, ergibt sich bei der Entfernungsbestimmung gemäß der vorliegenden Offenbarung ein näherungsweise linearer Anstieg von Messungenauigkeiten über die Entfernung (bezogen auf den Mittelwert aller Messungen einer Position), und das bei einer Präzision, die signifikant höher ist als etwa bei der herkömmlichen Technik wie in Fig. 7(b) dargestellt. Diese Messungenauigkeit zur tatsächlichen Entfernung (‚Ground Truth') kann damit durch ein Polynom ersten Grades beschrieben und für beliebige Entfernungen kompensiert werden. Damit kann die Genauigkeit (‚accuracy') erheblich gesteigert werden. Die Berechnung des Polynoms benötigt wenig Rechenressourcen, wodurch die Verarbeitung basierend auf der Kalibrierung auch ‚standalone' an der Vorrichtung durchgeführt werden kann.

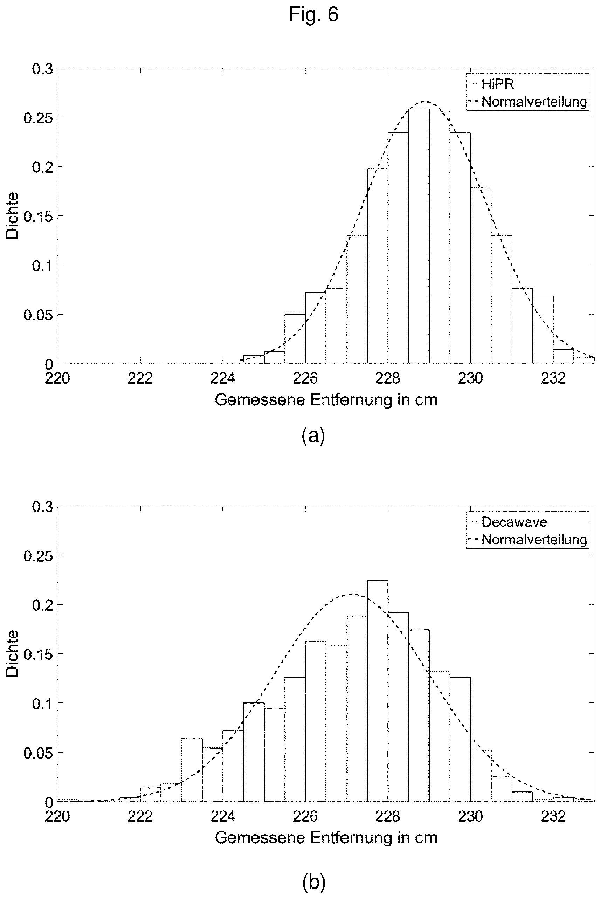

Im Folgenden, auch mit Bezug auf Figuren 6 und 7, werden experimentelle Testergebnisse beschrieben, um die vorteilhaften Wirkungen der vorliegenden Offenbarung zu veranschaulichen.

Die Testergebnisse für die Lehre gemäß der vorliegenden Offenbarung (die hierin nachstehend als "HiPR" bezeichnet wird) beruhen auf einem Testbett, in dem Decawave EVK 1000 Baugruppen in den Vorrichtungen verwendet wurden, wobei auf diesen das vorstehend beschriebene Entfernungsbestimmungsprotokoll (mit Fehlerbehandlung) ausgeführt wurde. Die Testergebnisse der herkömmlichen Technik (die hierin nachstehend als "Decawave" bezeichnet wird) beruhen auf einem Testbett, in dem Decawave EVK 1000 Baugruppen in den Vorrichtungen verwendet wurden, wobei das originale Decawave-Entfernungsbestimmungsprotokoll (wie es in EP 3 158 359 A1 beschrieben ist) ausgeführt wurde. Die jeweils eingesetzten Decawave EVK 1000 Baugruppen haben einen IEEE 802.15.4-2011-konformen Sendeempfänger, der eine Datenrate von 6,8 Mbps und eine Paketlänge von 1023 Bytes ermöglicht. Die Vorrichtungen wurden so abgestimmt, dass sie auf einer Mittenfrequenz von 4,5 GHz (Kanal 3) und einer Bandbreite von 500 MHz arbeiten. Das System wurde zentralisiert betrieben, sodass die Vorrichtung (z.B. Vorrichtung A in Fig. 1), die die Entfernungsbestimmung durchführt, als Zugangspunkt arbeitet.

Es wird zunächst die Erfassungszeit betrachtet, wobei die Erfassungszeit für eine Entfernungsbestimmung bzw. Messung ebenso wie die Erfassungszeit für eine Vielzahl von (aufeinanderfolgenden) Entfernungsbestimmungen bzw. Messungen (Iterationen) betrachtet werden. Dazu wurde die durchschnittliche Erfassungszeit für 1, 10, 200 und 1000 Iterationen bestimmt, und die Ergebnisse sind in der folgenden Tabelle veranschaulicht.

| Erfassungszeit in ms (durchschnittliche Erfassungszeit pro Messung (über i Iterationen)) | Anzahl von Iterationen (i) | | | |
|---|---|---|---|---|
| | 1 | 10 | 100 | 1000 |
| HiPR | 25 | 14 | 12 | 11 |
| Decawave (original) | 881 | 564 | 508 | 506 |
| Decawave (zeitoptimiert) | 761 | 426 | 389 | 387 |

Es ist ersichtlich, dass schon bei 1er Iteration die Erfassungszeit von HiPR etwa 30 Mal schneller ist als für die zeitoptimierte Variante von Decawave. Dieser Vorteil ergibt sich schon durch die Hardware-getriggerte Zeitstempelung (zusammen mit der Verwendung kurzer Beacon-Nachrichten) von HiPR, die das Software-basierte Polling von Decawave leistungsmäßig übertrifft. Darüber hinaus verteilt der iterative Ansatz von HiPR Teile des Protokolloverheads über mehrere Messungen, wodurch die durchschnittliche Erfassungszeit mit der Anzahl von Iterationen für HiPR abnimmt.

Im Folgenden wird die Genauigkeit ('accuracy') für eine bestimmte Entfernung definiert als der Mittelwert des Entfernungsbestimmungsfehlers, d.h. $\bar{\epsilon}(d) = \frac{1}{n}\sum_{i=1}^{n} \epsilon_i(d)$ mit einer ausreichend hohen Anzahl von Schätzungen $n$. Die Präzision ('precision') wird definiert als die Varianz der Entfernungsbestimmungsfehler, d.h.

$$\sigma_\epsilon^2(d) = \frac{1}{n-1}\sum_{i=1}^{n} \left(\epsilon_i(d) - \bar{\epsilon}(d)\right)^2.$$

Fig. 6 zeigt Graphen, die experimentelle Testergebnisse in Form von Histogrammen von Entfernungsbestimmungen darstellen. Dabei stellt Fig. 6(a) das Histogramm gemäß der vorliegenden Offenbarung ("HiPR") dar, und stellt Fig. 6(b) das Histogramm gemäß der herkömmlichen Technik ("Decawave") dar, jeweils bei einer definierten Entfernung von 200 cm.

Das Einpassen einer Normalverteilung in die sich ergebenden Histogramme zeigt, dass die Mittelwerte und damit die Genauigkeiten (,accuracy) für die beiden Techniken ähnlich sind, wobei jedoch die Varianz und damit die Präzision bei HiPR besser ist als bei Decawave.

Aufgrund der schnelleren Erfassungszeit ist HiPR in der Lage, ungefähr 30 Entfernungsbestimmungen bzw. Messungen durchzuführen, wenn Decawave eine Entfernungsbestimmung bzw. Messung durchführt. Dadurch können in der gleichen Zeit Entfernungsbestimmungen bzw. Messungen zu mehreren anderen Vorrichtungen durchgeführt werden, oder können mehrere Entfernungsbestimmungen bzw. Messungen zu einer anderen Vorrichtung durchgeführt werden, um die Genauigkeit und insbesondere die Präzision von dieser zu erhöhen.

Fig. 7 zeigt Graphen, die experimentelle Testergebnisse in Form von Entfernungsbestimmungsgenauigkeiten darstellen. Dabei stellt Fig. 7(a) die Entfernungsbestimmungsgenauigkeiten gemäß der vorliegenden Offenbarung ("HiPR") dar, und stellt Fig. 7(b) die Entfernungsbestimmungsgenauigkeiten gemäß der herkömmlichen Technik ("Decawave") dar, für verschiedene Entfernungen. Bei HiPR entspricht jede Entfernungsbestimmung bzw. Messung einem Mittelwert aus 30 ToF-Schätzungen.

In Fig. 7 stellen die Kästchen die oberen und unteren Quartile dar, wobei die horizontale Linie in den Kästchen den Median darstellt.

Es ist ersichtlich, dass HiPR dazu tendiert, eine geringfügig schlechtere Genauigkeit zu haben. Allerdings ist HiPR im Hinblick auf die Präzision deutlich im Vorteil. Dies zeigt sich dadurch, dass die Breite der Kästchen (und somit die Varianz der Messungen) bei HiPR viel kleiner ist als bei Decawave, und zwar für alle Entfernungen. Auch ist die Anzahl von Ausreißern für HiPR viel geringer. Die Varianz von HiPR beträgt nur 0,15 cm, im Vergleich zu 6 cm bei Decawave, was eine durchschnittlich 40-fach höhere Präzision ergibt. Bei einer Entfernung von 100 cm zeigt HiPR sogar eine 100-fach höhere Präzision.

Damit ist deutlich erkennbar, dass HiPR gegenüber Decawave deutlich überlegen ist, wenn systematische Fehler kompensiert werden können. Wie es vorstehend dargelegt ist, ist die geringfügig geringere Genauigkeit in der Praxis unproblematisch, da diese etwa durch eine Korrekturfunktion kompensiert werden kann. Durch die gesteigerte Präzision von HiPR wird die Generierung einer zuverlässigen und effektiven Korrekturfunktion (über ein Polynom) ermöglicht.

Die vorstehend dargelegten Protokolle, Abläufe, Verfahren und Funktionen gemäß der vorliegenden Offenbarung können durch jeweilige Vorrichtungen, Knoten, Funktionselemente, Baugruppen, Module, Einheiten oder dergleichen implementiert werden.

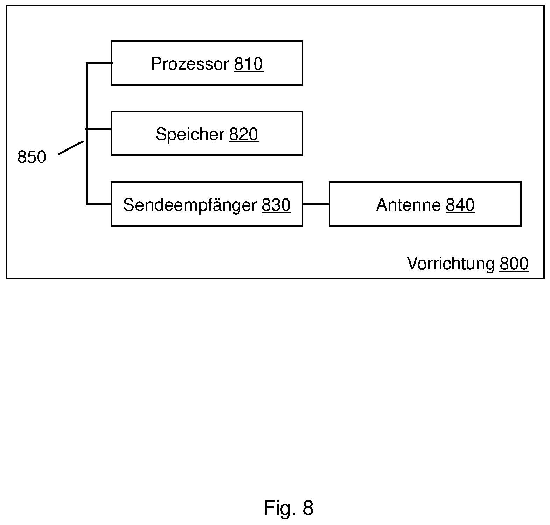

Fig. 8 zeigt eine schematische Darstellung, die einen beispielhaften Aufbau einer Vorrichtung gemäß einem Ausführungsbeispiel darstellt. Die veranschaulichte Vorrichtung ist grundsätzlich zur Entfernungsbestimmung zu einer anderen Vorrichtung, etwa über Ultrabreitbandkommunikation, geeignet bzw. konfiguriert.

Wie es in Fig. 8, dargestellt ist, umfasst eine Vorrichtung 800 gemäß dem vorliegenden Ausführungsbeispiel zumindest einen Prozessor 810, zumindest einen Speicher 820 und zumindest einen Sendeempfänger 830, die etwa durch zumindest einen Bus 850 verbunden sind, und zumindest eine Antenne 840.

Die veranschaulichte Vorrichtung 800 ist geeignet zur Verwendung in dem Entfernungsbestimmungsprotokoll gemäß der vorliegenden Offenbarung und deren Ausführungsbeispiele, wie es hierin vorstehend beschrieben ist. Die Vorrichtung 800 kann nämlich entweder als Vorrichtung A oder Vorrichtung B arbeiten, und dabei kann die Vorrichtung 800 (insbesondere deren Prozessor, etwa mit dem Computerprogramm) die jeweiligen Betriebsvorgänge durchführen, wie sie aus Figuren 1 bis 5 und der zugehörigen Beschreibung ersichtlich sind.

Der Prozessor 810, der Speicher 820 und der Sendeempfänger 830 können durch einen Chip, einen Chipsatz oder eine Baugruppe implementiert werden, wie etwa beispielsweise eine Decawave EVK 1000 Baugruppe, wobei der Prozessor 810, der Speicher 820 und der Sendeempfänger 830 entsprechend der Lehre der vorliegenden Offenbarung verändert, angepasst bzw. konfiguriert sind. Der Sendeempfänger 830 (in Kombination mit dem Prozessor 810 und/oder dem Speicher 820) ist für eine zugrundeliegende Kommunikationstechnologie eingerichtet, wie etwa beispielsweise UWB-fähig bzw. IEEE 802.15.4-2011-konform.

Der Speicher 820 kann ein oder mehr Computerprogramme (d.h. Computerprogrammcode oder Computerausführbare Anweisungen) zur Steuerung oder Verwirklichung der einzelnen Funktionsblöcke bzw. -elemente oder deren Funktionalitäten bzw. Betriebsvorgängen gemäß der vorliegenden Offenbarung, ebenso wie benötigte Daten, Parameter, Informationen und dergleichen Speichern. Insofern kann der Speicher 820 zum Beispiel ein (nicht-vorübergehendes bzw. dingliches) Speichermedium oder ein Computerprogrammprodukt mit Computerprogrammcode darstellen bzw. verwirklichen, der, wenn er auf einem Computer (etwa dem Prozessor 810) ausgeführt wird, den Computer (etwa dem Prozessor 810) veranlasst zu arbeiten wie/als die Vorrichtung A oder Vorrichtung B in dem Entfernungsbestimmungsprotokoll gemäß der vorliegenden Offenbarung, wie es hierin vorstehend beschrieben ist.

Wenn sie als Vorrichtung A arbeitet bzw. diese darstellt, kann die Vorrichtung 800 oder deren Prozessor (ggf. in Kombination mit dem Sendeempfänger, der Antenne und dem Speicher), in ihrer grundlegendsten Form, etwa konfiguriert sein mit

einer Übertragungseinrichtung, die konfiguriert ist zum Empfangen einer ersten Beacon-Nachricht von der anderen Vorrichtung, Senden einer zweiten Beacon-Nachricht, als Antwort auf die erste Beacon-Nachricht, an die andere Vorrichtung, Empfangen einer dritten Beacon-Nachricht, die eine Antwort auf die zweite Beacon-Nachricht darstellt, von der anderen Vorrichtung, und Empfangen einer vierten Beacon-Nachricht von der anderen Vorrichtung,
einer Zeitstempelgewinnungseinrichtung, die konfiguriert ist zum Gewinnen von Zeitstempeln bezüglich der Übertragung der ersten bis dritten Beacon-Nachrichten, wobei beim Empfangen der ersten Beacon-Nachricht ein Hardwareinterrupt zum Erfassen deren Empfangszeitpunkts als zweiter Zeitstempel getriggert wird, beim Senden der zweiten Beacon-Nachricht ein Hardwareinterrupt zum Erfassen deren Sendezeitpunkts als dritter Zeitstempel getriggert wird, beim Empfangen der dritten Beacon-Nachricht ein Hardwareinterrupt zum Erfassen deren Empfangszeitpunkts als sechster Zeitstempel getriggert wird, und ein erster Zeitstempel und ein vierter Zeitstempel (bzw. Informationen über diese) aus der dritten Beacon-Nachricht extrahiert werden, wobei der erste Zeitstempel den Sendezeitpunkt der ersten Beacon-Nachricht von der anderen Vorrichtung darstellt und der vierte Zeitstempel den Empfangszeitpunkt der zweiten Beacon-Nachricht an der anderen Vorrichtung darstellt, und beim Empfangen der vierten Beacon-Nachricht ein fünfter Zeitstempel (bzw. Informationen über diesen) aus der vierten Beacon-Nachricht extrahiert wird, wobei der fünfte Zeitstempel den Sendezeitpunkt der dritten Beacon-Nachricht von der anderen Vorrichtung darstellt, und
einer Herleitungseinrichtung, die konfiguriert ist zum Herleiten einer Schätzung einer Flugzeit zu der anderen Vorrichtung basierend auf den ersten bis sechsten Zeitstempeln.

Wenn sie als Vorrichtung B arbeitet bzw. diese darstellt, kann die Vorrichtung 800 oder deren Prozessor (ggf. in Kombination mit dem Sendeempfänger, der Antenne und dem Speicher), in ihrer grundlegendsten Form, etwa konfiguriert sein mit

einer Übertragungseinrichtung, die konfiguriert ist zum Senden einer ersten Beacon-Nachricht an die andere Vorrichtung, Empfangen einer zweiten Beacon-Nachricht, die eine Antwort auf die erste Beacon-Nachricht darstellt, von der anderen Vorrichtung, Senden einer dritten Beacon-Nachricht, als Antwort auf die zweite Beacon-Nachricht, an die andere Vorrichtung, und Senden einer vierten Beacon-Nachricht, nach der dritten Beacon-Nachricht, an die andere Vorrichtung,
einer Zeitstempelbereitstellungseinrichtung, die konfiguriert ist zum Erzeugen und Bereitstellen von Zeitstempeln bezüglich der Übertragung der ersten bis dritten Beacon-Nachrichten, wobei beim Senden der ersten Beacon-Nachricht ein Hardwareinterrupt zum Erfassen deren Sendezeitpunkts als erster Zeitstempel getriggert wird, beim Empfangen der zweiten Beacon-Nachricht ein Hardwareinterrupt zum Erfassen deren Empfangszeitpunkts als vierter Zeitstempel getriggert wird, beim Senden der dritten Beacon-Nachricht ein Hardwareinterrupt zum Erfassen deren Sendezeitpunkts als fünfter Zeitstempel getriggert wird, der erste Zeitstempel und der vierte Zeitstempel (bzw. Informationen über diese) in die dritte Beacon-Nachricht eingebunden/-fügt werden, und der fünfte Zeitstempel (bzw. Informationen über diesen) in die vierte Beacon-Nachricht eingebunden/-fügt wird.

Für weitere Einzelheiten hinsichtlich der Funktionalität und Betriebsfähigkeit der jeweiligen Vorrichtungen (oder deren Funktionsblöcke oder -elemente) gemäß der vorliegenden Offenbarung wird Bezug genommen auf die vorstehende Beschreibung in Verbindung mit einer oder mehreren von Figuren 1 bis 5.

Generell ist zu beachten, dass jeweilige Funktionsblöcke oder -elemente oder dergleichen durch beliebige Mittel oder Technologien implementiert werden können. Zum Beispiel kann der Prozessor (und der Speicher) als ein Chip, ein Chipsatz, eine Baugruppe oder mehrerer solcher, etwa als CPU, μC, Mikroprozessor, ASIC, FPGA oder dergleichen, implementiert werden. Weiterhin können jeweilige Funktionsblöcke oder -elemente als Software und/oder Hardware implementiert werden.

Die vorliegende Offenbarung deckt jegliche denkbare Kombination von Protokoll- bzw. Verfahrensschritten und Betriebsvorgängen ab, wie sie hierin beschrieben sind, sowie jegliche denkbare Kombination von Vorrichtungen, Knoten, Funktionselementen, Baugruppen, Modulen, Einheiten oder dergleichen, solange die hierin beschriebenen Konzepte anwendbar sind. Insofern deckt die vorliegende Offenbarung auch ein System ab, das aus zwei oder mehr Vorrichtungen besteht, wie sie vorstehend beschrieben sind.

Hierin ist ein Entfernungsbestimmungsprotokoll offenbart, das eine hochpräzise und schnelle Entfernungsbestimmung zwischen einer ersten Vorrichtung und einer zweiten Vorrichtung über Ultrabreitbandkommunikation ermöglicht. Dabei werden zur Entfernungsbestimmung vier Beacon-Nachrichten zwischen der ersten und der zweiten Vorrichtung ausgetauscht, wobei Hardwareinterrupts zum Erfassen der jeweiligen Sende- und Empfangszeitpunkte der ersten bis dritten Beacon-Nachrichten als Zeitstempel an der jeweiligen Vorrichtung getriggert werden, die erforderlichen Zeitstempel in Beacon-Nachrichten an die andere Vorrichtung übertragen werden, und eine Schätzung einer Flugzeit zwischen der ersten und der zweiten Vorrichtung basierend auf den Zeitstempeln bezüglich der Übertragung der ersten bis dritten Beacon-Nachrichten hergeleitet wird.

Obgleich die vorliegende Offenbarung vorstehend unter Bezugnahme auf Ausführungsbeispiele in Anbetracht der begleitenden Zeichnungen beschrieben ist, ist es für den Fachmann selbstverständlich, dass die vorliegende Offenbarung nicht darauf beschränkt ist. Vielmehr ist es den Fachmann ersichtlich, dass die vorliegende Offenbarung in vielfältiger Weise modifiziert werden, ohne von ihrem Grundgedanken und ihrem Umfang abzuweichen.

## Patentansprüche

1. Verfahren zur Entfernungsbestimmung zwischen einer ersten Vorrichtung (B) und einer zweiten Vorrichtung (A) über Ultrabreitbandkommunikation, mit:

   Übertragen einer ersten Beacon-Nachricht von der ersten Vorrichtung (B) an die zweite Vorrichtung (A), wobei ein Hardwareinterrupt zum Erfassen deren Sendezeitpunkts als erster Zeitstempel ($T_1$) an der ersten Vorrichtung (B) getriggert wird und ein Hardwareinterrupt zum Erfassen deren Empfangszeitpunkts als zweiter Zeitstempel ($T_2$) an der zweiten Vorrichtung (A) getriggert wird,
   Übertragen einer zweiten Beacon-Nachricht, als Antwort auf die erste Beacon-Nachricht, von der zweiten Vorrichtung (A) an die erste Vorrichtung (B), wobei ein Hardwareinterrupt zum Erfassen deren Sendezeitpunkts als dritter Zeitstempel ($T_3$) an der zweiten Vorrichtung (A) getriggert wird und ein Hardwareinterrupt zum Erfassen deren Empfangszeitpunkts als vierter Zeitstempel ($T_4$) an der ersten Vorrichtung (B) getriggert wird,
   Übertragen einer dritten Beacon-Nachricht, als Antwort auf die zweite Beacon-Nachricht, von der ersten Vorrichtung (B) an die zweite Vorrichtung (A), wobei ein Hardwareinterrupt zum Erfassen deren Sendezeitpunkts als fünfter Zeitstempel ($T_5$) an der ersten Vorrichtung (B) getriggert wird und ein Hardwareinterrupt zum Erfassen deren Empfangszeitpunkts als sechster Zeitstempel ($T_6$) an der zweiten Vorrichtung (A) getriggert wird, wobei die dritte Beacon-Nachricht den ersten Zeitstempel ($T_1$) und den vierten Zeitstempel ($T_4$) umfasst,
   Übertragen einer vierten Beacon-Nachricht, nach der dritten Beacon-Nachricht, von der ersten Vorrichtung (B) an die zweite Vorrichtung (A), wobei die vierte Beacon-Nachricht den fünften Zeitstempel ($T_5$) umfasst,
   Herleiten einer Schätzung einer Flugzeit zwischen der ersten Vorrichtung (B) und der zweiten Vorrichtung (A) basierend auf den ersten bis sechsten Zeitstempeln ($T_1$, $T_2$, $T_3$, $T_4$, $T_5$, $T_6$) an der zweiten Vorrichtung (A),
   Erhalten der Flugzeit zwischen der ersten Vorrichtung (B) und der zweiten Vorrichtung (A) als die Schätzung der Flugzeit, die für einen Satz von Beacon-Nachrichten hergeleitet wird, wenn jeweils eine erste, zweite und dritte Beacon-Nachricht zwischen der ersten Vorrichtung (B) und der zweiten Vorrichtung (A) übertragen wird, oder Erhalten der Flugzeit zwischen der ersten Vorrichtung (B) und der zweiten Vorrichtung (A) als ein Mittelwert der Schätzungen der Flugzeit, die für Sätze von Beacon-Nachrichten hergeleitet werden, wenn jeweils mehrere erste, zweite und dritte Beacon-Nachrichten zwischen der ersten Vorrichtung (B) und der zweiten Vorrichtung (A) übertragen werden, und
   Erhalten einer Entfernung zwischen der ersten Vorrichtung (B) und der zweiten Vorrichtung (A) basierend auf der erhaltenen Flugzeit zwischen der ersten Vorrichtung (B) und der zweiten Vorrichtung (A).

2. Verfahren gemäß Anspruch 1, wobei die Schätzung der Flugzeit hergeleitet wird durch Berechnung von $\widetilde{ToF}$ unter Verwendung der folgenden Gleichung:

$$\widetilde{ToF} = \frac{T_{round1}T_{round2} - T_{reply1}T_{reply2}}{T_{round1} + T_{round2} + T_{reply1} + T_{reply2}}$$

wobei

   $T_{round1}$ eine Antwortperiode zwischen dem ersten Zeitstempel ($T_1$) und dem vierten Zeitstempel ($T_4$) darstellt,
   $T_{round2}$ eine Antwortperiode zwischen dem dritten Zeitstempel ($T_3$) und dem sechsten Zeitstempel ($T_6$) darstellt,
   $T_{reply1}$ eine Sendeperiode zwischen dem zweiten Zeitstempel ($T_2$) und dem dritten Zeitstempel ($T_3$) darstellt, und
   $T_{reply2}$ eine Sendeperiode zwischen dem vierten Zeitstempel ($T_4$) und dem fünften Zeitstempel ($T_5$) darstellt.

3. Verfahren gemäß Anspruch 1, wobei die Schätzung der Flugzeit hergeleitet wird durch Berechnung von $\widetilde{ToF}$ unter Verwendung der folgenden Gleichung:

**EP 3 822 662 B1**

$$\widehat{\mathrm{ToF}} = \frac{(T_{\mathrm{round1}} - A_{D_{TX}} - A_{D_{RX}})(T_{\mathrm{round2}} - B_{D_{TX}} - B_{D_{RX}}) - (T_{\mathrm{reply1}} + B_{D_{RX}} + B_{D_{TX}})(T_{\mathrm{reply2}} + A_{D_{RX}} + A_{D_{TX}})}{T_{\mathrm{round1}} + T_{\mathrm{round2}} + T_{\mathrm{reply1}} + T_{\mathrm{reply2}}}$$

wobei

$T_{round1}$ eine Antwortperiode zwischen dem ersten Zeitstempel ($T_1$) und dem vierten Zeitstempel ($T_4$) darstellt,
$T_{round2}$ eine Antwortperiode zwischen dem dritten Zeitstempel ($T_3$) und dem sechsten Zeitstempel ($T_6$) darstellt,
$T_{reply1}$ eine Sendeperiode zwischen dem zweiten Zeitstempel ($T_2$) und dem dritten Zeitstempel ($T_3$) darstellt, und
$T_{reply2}$ eine Sendeperiode zwischen dem vierten Zeitstempel ($T_4$) und dem fünften Zeitstempel ($T_5$) darstellt,
$A_{DTX}$ und $B_{DTX}$ eine Hardware-spezifische Sendeverzögerung eines Sendeempfängers (830) einer der ersten Vorrichtung (B) und der zweiten Vorrichtung (A) darstellt, und
$A_{DRX}$ und $B_{DRX}$ eine Hardware-spezifische Empfangsverzögerung eines Sendeempfängers (830) einer der ersten Vorrichtung (B) und der zweiten Vorrichtung (A) darstellt.

4. Verfahren gemäß einem der Ansprüche 1 bis 3, wobei

eine vorbestimme Anzahl von ersten Beacon-Nachrichten hintereinander von der ersten Vorrichtung (B) an die zweite Vorrichtung (A) gesendet wird,
die vorbestimme Anzahl von zweiten Beacon-Nachrichten hintereinander von der zweiten Vorrichtung (A) an die erste Vorrichtung (B) gesendet wird, und
eine vorbestimme Anzahl von dritten Beacon-Nachrichten hintereinander von der ersten Vorrichtung (B) an die zweite Vorrichtung (A) gesendet wird.

5. Verfahren gemäß einem der Ansprüche 1 bis 4, wobei das Verfahren zusätzlich aufweist: Korrigieren der erhaltenen Entfernung unter Verwendung einer Korrekturfunktion, die eine Beziehung zwischen einer Entfernungsbestimmungsungenauigkeit und einer Entfernung als Ergebnis einer Kalibrierung beschreibt.

6. Verfahren gemäß einem der Ansprüche 1 bis 5, wobei das Verfahren zusätzlich aufweist:
Durchführen einer Fehlerbehandlung an der ersten und/oder der zweiten Vorrichtung (A, B), mit

Bestimmen einer Zeitüberschreitungsbedingung, wenn innerhalb einer vorbestimmten Zeitperiode seit dem Sendezeitpunkt der vorher gesendeten Beacon-Nachricht keine Beacon-Nachricht empfangen wird,
Verwerfen des Zeitstempels des Sendezeitpunkts der vorher gesendeten Beacon-Nachricht, und
Neuinitiieren eines Sendens einer Beacon-Nachricht, die die vorher gesendete Beacon-Nachricht ersetzt, wobei ein Hardwareinterrupt zum Erfassen deren Sendezeitpunkts als entsprechender Zeitstempel getriggert wird, der den verworfenen Zeitstempel ersetzt.

7. Verfahren gemäß einem der Ansprüche 1 bis 6, wobei, für jede Beacon-Nachricht, der Zeitstempel getriggert wird, wenn die Beacon-Nachricht durch eine Antenne (840) der jeweiligen Vorrichtung (A, B) abgestrahlt oder aufgefangen wird.

8. Verfahren gemäß einem der Ansprüche 1 bis 7, wobei eine Beacon-Nachricht eine Nachricht mit minimaler Größe ist, die keine Nutzlast enthält, oder die als Nutzlast einen oder zwei Zeitstempel enthält.

9. Verfahren gemäß einem der Ansprüche 1 bis 8, wobei die vierte Beacon-Nachricht eine dedizierte Beacon-Nachricht ist, die nicht zur Entfernungsbestimmung zwischen der ersten Vorrichtung (B) und der zweiten Vorrichtung (A) verwendet wird, oder die dritte Beacon-Nachricht eines nachfolgenden Entfernungsbestimmungszyklus zur Entfernungsbestimmung zwischen der ersten Vorrichtung (B) und der zweiten Vorrichtung (A) ist.

10. Vorrichtung (A), die konfiguriert ist zur Entfernungsbestimmung zu einer anderen Vorrichtung (B) über Ultrabreitbandkommunikation, mit:

einer Übertragungseinrichtung, die konfiguriert ist zum

Empfangen einer ersten Beacon-Nachricht von der anderen Vorrichtung (B),
Senden einer zweiten Beacon-Nachricht, als Antwort auf die erste Beacon-Nachricht, an die andere Vorrichtung (B),

15

Empfangen einer dritten Beacon-Nachricht, die eine Antwort auf die zweite Beacon-Nachricht darstellt, von der anderen Vorrichtung (B), und

Empfangen einer vierten Beacon-Nachricht von der anderen Vorrichtung (B),

einer Zeitstempelgewinnungseinrichtung, die konfiguriert ist zum Gewinnen von Zeitstempeln bezüglich der Übertragung der ersten bis dritten Beacon-Nachrichten, wobei

beim Empfangen der ersten Beacon-Nachricht ein Hardwareinterrupt zum Erfassen deren Empfangszeitpunkts als zweiter Zeitstempel ($T_2$) getriggert wird,

beim Senden der zweiten Beacon-Nachricht ein Hardwareinterrupt zum Erfassen deren Sendezeitpunkts als dritter Zeitstempel ($T_3$) getriggert wird,

beim Empfangen der dritten Beacon-Nachricht ein Hardwareinterrupt zum Erfassen deren Empfangszeitpunkts als sechster Zeitstempel ($T_6$) getriggert wird, und ein erster Zeitstempel ($T_1$) und ein vierter Zeitstempel ($T_4$) aus der dritten Beacon-Nachricht extrahiert werden, wobei der erste Zeitstempel ($T_1$) den Sendezeitpunkt der ersten Beacon-Nachricht von der anderen Vorrichtung (B) darstellt und der vierte Zeitstempel ($T_4$) den Empfangszeitpunkt der zweiten Beacon-Nachricht an der anderen Vorrichtung (B) darstellt, und

beim Empfangen der vierten Beacon-Nachricht ein fünfter Zeitstempel ($T_5$) aus der vierten Beacon-Nachricht extrahiert wird, wobei der fünfte Zeitstempel ($T_5$) den Sendezeitpunkt der dritten Beacon-Nachricht von der anderen Vorrichtung (B) darstellt, und

einer Herleitungseinrichtung, die konfiguriert ist zum Herleiten einer Schätzung einer Flugzeit zu der anderen Vorrichtung (B) basierend auf den ersten bis sechsten Zeitstempeln ($T_1$, $T_2$, $T_3$, $T_4$, $T_5$, $T_6$), wobei die Vorrichtung (A) konfiguriert ist zum:

Erhalten der Flugzeit zwischen der ersten Vorrichtung (B) und der zweiten Vorrichtung (A) als die Schätzung der Flugzeit, die für einen Satz von Beacon-Nachrichten hergeleitet wird, wenn jeweils eine erste, zweite und dritte Beacon-Nachricht zwischen der ersten Vorrichtung (B) und der zweiten Vorrichtung (A) übertragen wird, oder Erhalten der Flugzeit zwischen der ersten Vorrichtung (B) und der zweiten Vorrichtung (A) als ein Mittelwert der Schätzungen der Flugzeit, die für Sätze von Beacon-Nachrichten hergeleitet werden, wenn jeweils mehrere erste, zweite und dritte Beacon-Nachrichten zwischen der ersten Vorrichtung (B) und der zweiten Vorrichtung (A) übertragen werden, und

Erhalten einer Entfernung zwischen der ersten Vorrichtung (B) und der zweiten Vorrichtung (A) basierend auf der erhaltenen Flugzeit zwischen der ersten Vorrichtung (B) und der zweiten Vorrichtung (A).

11. Vorrichtung (B), die konfiguriert ist zum Ermöglichen einer Entfernungsbestimmung zwischen der Vorrichtung (B) und einer anderen Vorrichtung (A) über Ultrabreitbandkommunikation durch die andere Vorrichtung (A), mit:

einer Übertragungseinrichtung, die konfiguriert ist zum:

Senden einer ersten Beacon-Nachricht an die andere Vorrichtung (A),

Empfangen einer zweiten Beacon-Nachricht, die eine Antwort auf die erste Beacon-Nachricht darstellt, von der anderen Vorrichtung (A),

Senden einer dritten Beacon-Nachricht, als Antwort auf die zweite Beacon-Nachricht, an die andere Vorrichtung (A), und

Senden einer vierten Beacon-Nachricht, nach der dritten Beacon-Nachricht, an die andere Vorrichtung (A),

einer Zeitstempelbereitstellungseinrichtung, die konfiguriert ist zum Erzeugen und Bereitstellen von Zeitstempeln bezüglich der Übertragung der ersten bis dritten Beacon-Nachrichten, wobei:

beim Senden der ersten Beacon-Nachricht ein Hardwareinterrupt zum Erfassen deren Sendezeitpunkts als erster Zeitstempel ($T_1$) getriggert wird,

beim Empfangen der zweiten Beacon-Nachricht ein Hardwareinterrupt zum Erfassen deren Empfangszeitpunkts als vierter Zeitstempel ($T_4$) getriggert wird,

beim Senden der dritten Beacon-Nachricht ein Hardwareinterrupt zum Erfassen deren Sendezeitpunkts als fünfter Zeitstempel ($T_5$) getriggert wird,

der erste Zeitstempel ($T_1$) und der vierte Zeitstempel ($T_4$) in die dritte Beacon-Nachricht eingebunden werden, und der fünfte Zeitstempel ($T_5$) in die vierte Beacon-Nachricht eingebunden wird.

**12.** Computerprogrammprodukt mit Computerprogrammcode, der, wenn er auf einem Computer ausgeführt wird, den Computer veranlasst zum Arbeiten als die Vorrichtung gemäß Anspruch 10 oder 11.

**13.** System zur Entfernungsbestimmung zu einer ersten Vorrichtung (B) und einer zweiten Vorrichtung (A) über Ultrabreitbandkommunikation, mit

der ersten Vorrichtung gemäß Anspruch 11, und
der zweiten Vorrichtung gemäß Anspruch 10.

**Claims**

**1.** A method for determining the distance between a first device (B) and a second device (A) via ultra-wideband communication comprising:

transmitting a first beacon message from the first device (B) to the second device (A), wherein a hardware interrupt for recording its time of transmission as a first time stamp ($T_1$) is triggered at the first device (B), and a hardware interrupt for recording its time of receipt as a second time stamp ($T_2$) is triggered at the second device (A),
transmitting a second beacon message, in response to the first beacon message, from the second device (A) to the first device (B), wherein a hardware interrupt for recording its time of transmission as a third time stamp ($T_3$) is triggered at the second device (A), and a hardware interrupt for recording its time of receipt as a fourth time stamp ($T_4$) is triggered at the first device (B),
transmitting a third beacon message, in response to the second beacon message, from the first device (B) to the second device (A), wherein a hardware interrupt for recording its time of transmission as a fifth time stamp ($T_5$) is triggered at the first device (B), and a hardware interrupt for recording its time of receipt as a sixth time stamp ($T_6$) is triggered at the second device (A), wherein the third beacon message comprises the first time stamp ($T_1$) and the fourth time stamp ($T_4$),
transmitting a fourth beacon message, after the third beacon message, from the first device (B) to the second device (A), wherein the fourth beacon message comprises the fifth time stamp ($T_5$),
deriving an estimate of a time of flight between the first device (B) and the second device (A) based on the first to sixth timestamps ($T_1$ $T_2$, $T_3$, $T_4$, $T_5$, $T_6$) at the second device (A),
obtaining the time of flight between the first device (B) and the second device (A) as the time of flight estimate derived for a set of beacon messages when a respective first, second and third beacon message is transmitted between the first device (B) and the second device (A), or obtaining the time of flight between the first device (B) and the second device (A) as a mean value of the time of flight estimates derived for sets of beacon messages when respective multiple first, second and third beacon messages are transmitted between the first device (B) and the second device (A), and
obtaining a distance between the first device (B) and the second device (A) based on the obtained time of flight between the first device (B) and the second device (A).

**2.** Method according to claim 1, wherein said time of flight estimate is derived by calculating $\widehat{ToF}$ using the following equation:

$$\widehat{ToF} = \frac{T_{round1} T_{round2} - T_{reply1} T_{reply2}}{T_{round1} + T_{round2} + T_{reply1} + T_{reply2}}$$

wherein

$T_{round1}$ is a response period between the first time stamp ($T_1$) and the fourth time stamp (T4),
$T_{round2}$ is a response period between the third time stamp ($T_3$) and the sixth time stamp (T6),
$T_{reply1}$ is a transmission period between the second time stamp ($T_2$) and the third time stamp ($T_3$),
$T_{reply2}$ is a transmission period between the fourth time stamp ($T_4$) and the fifth time stamp ($T_5$),

**3.** Method according to claim 1, wherein said time of flight estimate is derived by calculating $\widehat{ToF}$ using the following equation:

$$\widehat{ToF} = \frac{(T_{round1} - A_{D_{TX}} - A_{D_{RX}})(T_{round2} - B_{D_{TX}} - B_{D_{RX}}) - (T_{reply1} + B_{D_{RX}} + B_{D_{TX}})(T_{reply2} + A_{D_{RX}} + A_{D_{TX}})}{T_{round1} + T_{round2} + T_{reply1} + T_{reply2}}$$

wherein

$T_{round1}$ is a response period between the first time stamp ($T_1$) and the fourth time stamp (T4),
$T_{round2}$ is a response period between the third time stamp ($T_3$) and the sixth time stamp (T6),
$T_{reply1}$ is a transmission period between the second time stamp ($T_2$) and the third time stamp ($T_3$),
$T_{reply2}$ is a transmission period between the fourth time stamp ($T_4$) and the fifth time stamp ($T_5$),
$A_{DTX}$ and $B_{DTX}$ represent a hardware-specific transmission delay of a transceiver (830) of one of the first device (B) and the second device (A), and
$A_{DRX}$ and $B_{DRX}$ represent a hardware-specific reception delay of a transceiver (830) of one of the first device (B) and the second device (A).

4. Method according to one of claims 1 to 3, wherein

a predetermined number of first beacon messages are transmitted consecutively from the first device (B) to the second device (A),
the predetermined number of second beacon messages are transmitted consecutively from the second device (A) to the first device (B), and
a predetermined number of third beacon messages are transmitted consecutively from the first device (B) to the second device (A).

5. Method according to one of claims 1 to 4, the method additionally comprising: correcting the obtained distance using a correction function that describes a relationship between a ranging inaccuracy and a distance as result of a calibration.

6. Method according to one of claims 1 to 5, the method additionally comprising: performing an error treatment at the first and/or the second device (A, B), including

determining a time-out condition when no beacon message is received within a predetermined period of time since the transmission time of the previously transmitted beacon message,
discarding the time stamp of the transmission time of the previously transmitted beacon message, and
re-initiating transmission of a beacon message that replaces the previously transmitted beacon message, wherein a hardware interrupt for recording its transmission time as corresponding time stamp is triggered that replaces the discarded time stamp.

7. Method according to one of claims 1 to 6, wherein, for each beacon message, the time stamp is triggered when the beacon message is emitted or intercepted by an antenna (840) of the respective device (A, B).

8. Method according to one of claims 1 to 7, wherein a beacon message is a message of minimal size that contains no payload, or contains one or two timestamps as payload.

9. Method according to one of claims 1 to 8, wherein the fourth beacon message is a dedicated beacon message that is not used for ranging between the first device (B) and the second device (A), or is the third beacon message of a subsequent ranging cycle for determining the distance between the first device (B) and the second device (A).

10. A device (A) configured to determine the distance to another device (B) via ultra-wideband communication, including:

a transmission means configured to

receive a first beacon message from the other device (B), transmit a second beacon message, in response to the first beacon message, to the other device (B),
receive a third beacon message, representing a response to the second beacon message, from the other device (B), and
receive a fourth beacon message from the other device (B),

a time stamp obtaining means configured to obtain time stamps with respect to the transmission of the first to third beacon messages, wherein,
upon receiving the first beacon message, a hardware interrupt for recording its time of receipt as second time stamp ($T_2$) is triggered,
upon transmitting the second beacon message, a hardware interrupt for recording its time of transmission as third time stamp ($T_3$) is triggered,
upon receiving the third beacon message, a hardware interrupt for recording its time of receipt as sixth time stamp ($T_6$) is triggered, and
a first time stamp ($T_1$) and a fourth time stamp ($T_4$) are extracted from the third beacon message, wherein the first time stamp ($T_1$) represents the time of transmission of the first beacon message from the other device (B), and the fourth time stamp ($T_4$) represents the time of receipt of the second beacon message at the other device (B), and
upon receiving the fourth beacon message, a fifth time stamp ($T_5$) is extracted from the fourth beacon message, wherein the fifth time stamp ($T_5$) represents the time of transmission of the third beacon message from the other device (B), and
a derivation means, configured to derive an estimate of a time of flight to the other device (B) based on the first to sixth time stamps ($T_1$ $T_2$, $T_3$, $T_4$, $T_5$, $T_6$),
the device (A) being configured to:

    obtain the time of flight between the first device (B) and the second device (A) as the time of flight estimate derived for a set of beacon messages when a respective first, second and third beacon message is transmitted between the first device (B) and the second device (A), or obtain the time of flight between the first device (B) and the second device (A) as a mean value of the time of flight estimates derived for sets of beacon messages when respective multiple first, second and third beacon messages are transmitted between the first device (B) and the second device (A), and
    obtain a distance between the first device (B) and the second device (A) based on the obtained time of flight between the first device (B) and the second device (A).

11. A device (B), configured to enable the determination of the distance between the device (B) and another device (A) via ultra-wideband communication by the other device (A), including:

    a transmission means configured to:

        transmit a first beacon message to the other device (A),
        receive a second beacon message that represents a response to the first beacon message, from the other device (A),
        transmit a third beacon message, in response to the second beacon message, to the other device (A), and
        transmit a fourth beacon message, after the third beacon message, to the other device (A),

    a time stamp provision means, configured to generate and provide time stamps with respect to the transmission of the first to third beacon messages, wherein:

        upon transmitting the first beacon message, a hardware interrupt for recording its time of transmission as first time stamp ($T_1$) is triggered,
        upon receiving the second beacon message, a hardware interrupt for recording its time of receipt as fourth time stamp ($T_4$) is triggered,
        upon transmitting the third beacon message, a hardware interrupt for recording its time of transmission as fifth time stamp ($T_5$) is triggered,
        the first time stamp ($T_1$) and the fourth time stamp ($T_4$) are included in the third beacon message, and the fifth time stamp ($T_5$) is included in the fourth beacon message.

12. A computer program product including computer program code which, when executed on a computer, causes the computer to operate as the device according to claim 10 or 11.

13. A system for determining the distance to a first device (B) and a second device (A) via ultra-wideband communication including

    the first device according to claim 11, and

the second device according to claim 10.

**Revendications**

**1.** Procédé pour la détermination de la distance entre un premier dispositif (B) et un deuxième dispositif (A) par l'intermédiaire d'une communication à bande ultra-large, avec :

la transmission d'un premier message de balise par le premier dispositif (B) au deuxième dispositif (A), dans lequel une interruption de matériel est déclenchée pour détecter le moment de son envoi en tant que premier horodatage ($T_1$) sur le premier dispositif (B) et une interruption de matériel est déclenchée pour détecter le moment de sa réception en tant que deuxième horodatage ($T_2$) sur le deuxième dispositif (A),
la transmission d'un deuxième message de balise, en tant que réponse au premier message de balise, par le deuxième dispositif (A) au premier dispositif (B), dans lequel une interruption de matériel est déclenchée pour détecter le moment de son envoi en tant que troisième horodatage ($T_3$) sur le deuxième dispositif (A) et une interruption de matériel est déclenchée pour détecter le moment de sa réception en tant que quatrième horodatage ($T_4$) sur le premier dispositif (B),
la transmission d'un troisième message de balise, en réponse au deuxième message de balise, par le premier dispositif (B) au deuxième dispositif (A), dans lequel une interruption de matériel est déclenchée pour détecter le moment de son envoi en tant que cinquième horodatage ($T_5$) sur le premier dispositif (B) et une interruption de matériel est déclenchée pour détecter le moment de sa réception en tant que sixième horodatage ($T_6$) sur le deuxième dispositif (A), dans lequel le troisième message de balise comprend le premier horodatage ($T_1$) et le quatrième horodatage ($T_4$),
la transmission d'un quatrième message de balise, après le troisième message de balise, par le premier dispositif (B) au deuxième dispositif (A), dans lequel le quatrième message de balise comprend le cinquième horodatage ($T_5$),
la déduction d'une estimation d'un temps de propagation entre le premier dispositif (B) et le deuxième dispositif (A) sur la base des premiers aux sixièmes horodatages ($T_1$, $T_2$, $T_3$, $T_4$, $T_5$, $T_6$) sur le deuxième dispositif (A),
l'obtention du temps de propagation entre le premier dispositif (B) et le deuxième dispositif (A) en tant que l'estimation du temps de propagation, qui est déduit pour un ensemble de messages de balise, lorsque respectivement un premier, un deuxième et un troisième message de balise sont transmis entre le premier dispositif (B) et le deuxième dispositif (A), ou l'obtention du temps de propagation entre le premier dispositif (B) et le deuxième dispositif (A) en tant qu'une valeur moyenne des estimations du temps de propagation, qui sont déduites pour des ensembles de messages de balise, lorsque respectivement plusieurs premiers, deuxièmes et troisièmes messages de balise sont transmis entre le premier dispositif (B) et le deuxième dispositif (A), et
l'obtention d'une distance entre le premier dispositif (B) et le deuxième dispositif (A) sur la base du temps de propagation obtenu entre le premier dispositif (B) et le deuxième dispositif (A).

**2.** Procédé selon la revendication 1, dans lequel l'estimation du temps de propagation est déduite par le calcul de $\widetilde{\mathrm{ToF}}$ en utilisant l'équation suivante :

$$\widetilde{\mathrm{ToF}} = \frac{T_{round1}T_{round2} - T_{reply1}T_{reply2}}{T_{round1} + T_{round2} + T_{reply1} + T_{reply2}}$$

dans lequel

$T_{round1}$ représente un délai de réponse entre le premier horodatage ($T_1$) et le quatrième horodatage ($T_4$),
$T_{round2}$ représente un délai de réponse entre le troisième horodatage ($T_3$) et le sixième horodatage ($T_6$),
$T_{reply1}$ représente un délai d'envoi entre le deuxième horodatage ($T_2$) et le troisième horodatage ($T_3$), et
$T_{reply2}$ représente un délai d'envoi entre le quatrième horodatage ($T_4$) et le cinquième horodatage ($T_5$).

**3.** Procédé selon la revendication 1, dans lequel l'estimation du temps de propagation est déduite par le calcul de $\widetilde{\mathrm{ToF}}$ en utilisant l'équation suivante :

$$\widehat{ToF} = \frac{(T_{round1} - A_{D_{TX}} - A_{D_{RX}})(T_{round2} - B_{D_{TX}} - B_{D_{RX}}) - (T_{reply1} + B_{D_{RX}} + B_{D_{TX}})(T_{reply2} + A_{D_{RX}} + A_{D_{TX}})}{T_{round1} + T_{round2} + T_{reply1} + T_{reply2}}$$

dans lequel

$T_{round1}$ représente un délai de réponse entre le premier horodatage ($T_1$) et le quatrième horodatage ($T_4$),
$T_{round2}$ représente un délai de réponse entre le troisième horodatage ($T_3$) et le sixième horodatage ($T_6$),
$T_{reply1}$ représente un délai d'envoi entre le deuxième horodatage ($T_2$) et le troisième horodatage ($T_5$), et
$T_{reply2}$ représente un délai d'envoi entre le quatrième horodatage ($T_4$) et le cinquième horodatage ($T_5$),
$A_{DTX}$ et $B_{DTX}$ représentent une temporisation d'envoi spécifique au matériel d'un émetteur-récepteur (830) d'un du premier dispositif (B) et du deuxième dispositif (A), et
$A_{DRX}$ et $B_{DRX}$ représentent une temporisation de réception spécifique à un matériel d'un émetteur-récepteur (830) d'un du premier dispositif (B) et du deuxième dispositif (A).

4. Procédé selon l'une quelconque des revendications 1 à 3, dans lequel

un nombre prédéterminé de premiers messages de balise sont envoyés les uns après les autres par le premier dispositif (B) au deuxième dispositif (A),
le nombre prédéterminé de deuxièmes messages de balise sont envoyés les uns après les autres par le deuxième dispositif (A) au premier dispositif (B), et
un nombre prédéterminé de troisièmes messages de balise sont envoyés les uns après les autres par le premier dispositif (B) au deuxième dispositif (A).

5. Procédé selon l'une quelconque des revendications 1 à 4, dans lequel le procédé présente en supplément :
la correction de la distance obtenue en utilisant une fonction de correction, qui décrit une relation entre une précision de détermination de distance et une distance en tant que résultat d'un étalonnage.

6. Procédé selon l'une quelconque des revendications 1 à 5, dans lequel le procédé présente en supplément :

la mise en œuvre d'un traitement d'erreur sur le premier et/ou le deuxième dispositif (A, B), avec
la détermination d'une condition de dépassement de temps lorsqu'aucun message de balise n'est reçu dans un délai prédéterminé à compter du moment d'envoi du message de balise envoyé précédemment,
le rejet de l'horodatage du délai d'envoi du message de balise envoyé précédemment, et
la réinitialisation d'un envoi d'un message de balise, qui remplace le message de balise envoyé précédemment, dans lequel une interruption de matériel est déclenchée pour détecter le moment de son envoi en tant qu'horodatage correspondant, qui remplace l'horodatage rejeté.

7. Procédé selon l'une quelconque des revendications 1 à 6, dans lequel pour chaque message de balise, l'horodatage est déclenché lorsque le message de balise est émis ou intercepté par une antenne (840) du dispositif (A, B) respectif.

8. Procédé selon l'une quelconque des revendications 1 à 7, dans lequel un message de balise est un message avec une taille minimale, qui ne contient aucune charge utile ou qui contient en tant que charge utile un ou deux horodatages.

9. Procédé selon l'une quelconque des revendications 1 à 8, dans lequel le quatrième message de balise est un message de balise dédié, qui n'est pas utilisé pour déterminer la distance entre le premier dispositif (B) et le deuxième dispositif (A), ou le troisième message de balise d'un cycle de détermination de distance qui suit est utilisé pour déterminer la distance entre le premier dispositif (B) et le deuxième dispositif (A).

10. Dispositif (A), qui est configuré pour déterminer la distance par rapport à un autre dispositif (B) par l'intermédiaire d'une communication à bande ultra-large, avec :

un système de transmission, qui est configuré pour
recevoir un premier message de balise de l'autre dispositif (B),
envoyer à l'autre dispositif (B) un deuxième message de balise en tant que réponse au premier message de balise,
recevoir de l'autre dispositif (B) un troisième message de balise, qui constitue une réponse au deuxième message de balise, et

recevoir un quatrième message de balise de l'autre dispositif (B), d'un système d'obtention d'horodatage, qui est configuré pour obtenir des horodatages en ce qui concerne la transmission des premiers aux troisièmes messages de balise, dans lequel

lors de la réception du premier message de balise, une interruption de matériel est déclenchée pour détecter le moment de sa réception en tant que deuxième horodatage ($T_2$),

lors de l'envoi du deuxième message de balise, une interruption de matériel est déclenchée pour détecter le moment de son envoi en tant que troisième horodatage ($T_3$),

lors de la réception du troisième message de balise, une interruption de matériel est déclenchée pour détecter le moment de sa réception en tant que sixième horodatage ($T_6$), et

un premier horodatage ($T_1$) et un quatrième horodatage ($T_4$) sont extraits du troisième message de balise, dans lequel le premier horodatage ($T_1$) constitue le moment d'envoi du premier message de balise par l'autre dispositif (B) et le quatrième horodatage ($T_4$) constitue le moment de réception du deuxième message de balise sur l'autre dispositif (B),

lors de la réception du quatrième message de balise, un cinquième horodatage ($T_5$) est extrait du quatrième message de balise, dans lequel le cinquième horodatage ($T_5$) constitue le moment d'envoi du troisième message de balise par l'autre dispositif (B), et

un système de déduction, qui est configuré pour déduire une estimation d'un temps de propagation vers l'autre dispositif (B) sur la base des premiers aux sixièmes horodatages ($T_1$, $T_2$, $T_3$, $T_4$, $T_5$, $T_6$),

dans lequel le dispositif (A) est configuré pour :

obtenir le temps de propagation entre le premier dispositif (B) et le deuxième dispositif (A) en tant que l'estimation du temps de propagation qui est déduite pour un ensemble de messages de balise lorsque respectivement un premier, un deuxième et un troisième message de balise sont transmis entre le premier dispositif (B) et le deuxième dispositif (A), ou obtenir le temps de propagation entre le premier dispositif (B) et le deuxième dispositif (A) en tant qu'une valeur moyenne des estimations du temps de propagation, qui sont déduites pour des ensembles de messages de balise, lorsque respectivement plusieurs premiers, deuxièmes et troisièmes messages de balise sont transmis entre le premier dispositif (B) et le deuxième dispositif (A), et

obtenir une distance entre le premier dispositif (B) et le deuxième dispositif (A) sur la base du temps de propagation obtenu entre le premier dispositif (B) et le deuxième dispositif (A).

**11.** Dispositif (B) qui est configuré pour permettre une détermination de distance entre le dispositif (B) et un autre dispositif (A) par l'intermédiaire d'une communication à bande ultra-large par l'autre dispositif (A), avec :

- un système de transmission, qui est configuré pour :

- - envoyer un premier message de balise à l'autre dispositif (A),
- - recevoir, par l'autre dispositif (A), un deuxième message de balise qui constitue une réponse au premier message de balise,
- - envoyer à l'autre dispositif (A) un troisième message de balise en tant que réponse au deuxième message de balise, et
- - envoyer à l'autre dispositif (A) un quatrième message de balise après le troisième message de balise,

- un système de fourniture d'horodatage qui est configuré pour générer et fournir des horodatages en ce qui concerne la transmission des premiers aux troisièmes messages de balise, dans lequel :

- - lors de l'envoi du premier message de balise, une interruption de matériel est déclenchée pour détecter le moment de son envoi en tant que premier horodatage ($T_1$),
- - lors de la réception du deuxième message de balise, une interruption de matériel est déclenchée pour détecter le moment de sa réception en tant que quatrième horodatage ($T_4$),
- - lors de l'envoi du troisième message de balise, une interruption de matériel est déclenchée pour détecter le moment de son envoi en tant que cinquième horodatage ($T_5$),
- - le premier horodatage ($T_1$) et le quatrième horodatage ($T_4$) sont intégrés dans le troisième message de balise, et le cinquième horodatage ($T_5$) est intégré dans le quatrième message de balise.

**12.** Produit de programme informatique avec un code de programme informatique, qui, lorsqu'il est exécuté sur un ordinateur, amène l'ordinateur à travailler en tant que dispositif selon la revendication 10 ou 11.

13. Système pour la détermination de distance par rapport à un premier dispositif (B) et un deuxième dispositif (A) par l'intermédiaire de la communication à bande ultra-large, avec :

le premier dispositif selon la revendication 11, et
le deuxième dispositif selon la revendication 10.

Messung 1

Fig. 1

(a)

(b)

Messung 1

Messung 2

Fig. 2

Fig. 3

Fig. 4

Fig. 5

## Fig. 6

(a)

(b)

Fig. 7

(a)

(b)

Fig. 8

Vorrichtung 800

Antenne 840

Sendeempfänger 830

Speicher 820

850

Prozessor 810

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3158359 A1
- WO 2018011792 A
- US 2018267162 A1